# EUROPÄISCHE PATENTANMELDUNG

(11) **EP 2 581 865 A2**
(43) Veröffentlichungstag der Anmeldung: **17.04.2013**
(21) Anmeldenummer: 12180910.7
(22) Anmeldetag: 17.08.2012
(51) Int. Cl.: G06Q 10/10, G06F 17/30

(54) **Verfahren zur Synchronisation von Daten zwischen Entwicklungs- und/oder Produktionssteuerungssystemen**

(30) Priorität: 13.10.2011 DE 102011084456
(71) Anmelder: Cideon Software GmbH, 02826 Görlitz (DE)
(72) Erfinder: Stahr, Martin, 71254 Ditzingen (DE); Dietrich, Björn, 72184 Starzach - Wachendorf (DE); Farner, Stefanie, 70182 Stuttgart (DE); Rothe, Ralph, 70182 Stuttgart (DE)
(74) Vertreter: Lippert, Stachow & Partner

(57) **Zusammenfassung**

Der Erfindung, welche ein Verfahren zur Synchronisation von Daten zwischen Entwicklungs- und/oder Produktionssteuerungssystemen betrifft, liegt die Aufgabe zugrunde, ein Verfahren anzugeben, mit welchem eine vollautomatische, fehlersichere Synchronisation von Daten in miteinander gekoppelten Systemen möglich ist, wobei Beeinträchtigungen der Systeme, der Installations- und der Schulungsaufwand verringert werden. Diese Aufgabe wird durch das Verfahren derart gelöst, dass eine vollautomatische Synchronisation der Daten des ersten und des zweiten Entwicklungs - und/oder Produktionssteuerungssystems gesteuert durch ein Auslöseereignis mittels eines zwischen den Entwicklungs- und/oder Produktionssteuerungssystemen bereitgestellten Synchronisationsservers erfolgt. (Fig. 7)

## Beschreibung

Die Erfindung betrifft ein Verfahren zur Synchronisation von Daten zwischen Entwicklungs- und/oder Produktionssteuerungssystemen, bei welchem Daten (und Prozessinformationen) eines ersten Entwicklungs- und/oder Produktionssteuerungssystems an ein zweites Entwicklungs- und/oder Produktionssteuerungssystem oder umgekehrt übertragen werden.

In größeren Unternehmen wird eine Vielzahl verschiedener Entwicklungs- und Produktionssteuerungssysteme zur Steuerung des Unternehmens eingesetzt.

Wichtige Systeme aus diesem Bereich sind unter anderem:
• Product Lifecycle Management Systeme (PLM) zur Abbildung der Engineering Daten von der Produktidee bis zur Entsorgung
• Team Data Management Systeme (TDM) unterstützt die Zusammenarbeit von Engineeringteams
• Enterprise Resource Planning Systeme (ERP) Planung und Organisation von Unternehmens- und Fertigungsabläufen

Um diese Steuerung effizient umsetzen zu können, ist ein einheitliches Modell der unternehmensrelevanten Daten unabdingbar (Single Source ofTruth). Die oben genannten Systeme liefern permanent Daten, die in diesem Modell zusammengeführt und synchronisiert werden müssen.

Insbesondere der durchgängige Zugriff auf Spezifikationen, Dokumente und Entwicklungsergebnisse über die einzelnen Systemgrenzen hinweg ist ein wichtiger wettbewerbsfördernder Punkt im Unternehmen. Durch diesen, über ein entsprechendes Rechtemanagement abgesicherten, Zugriff der Mitarbeiter auf die Dokumente und den durchgängigen Zugriff auf Materialwesen sowie Prozess- und Projektsteuerung steht den Mitarbeitern und Verantwortlichen ein globales Steuerungsmittel zur Verfügung, welches von der ersten Idee über Produktentwicklung, Ressourcen und Einsatzplanung bis zur Entsorgung neuer Produkte alle notwendigen Daten verknüpft.

Die dabei anfallenden Informationen sind beispielsweise:
- **Daten:**
   - Produktspezifikationen
   - Dokumente (Angebote, Rechnungen ,Handbücher, Zeichnungen, ... )
   - Entwicklungsergebnisse (Virtuelles Produkt Modell)
   - Lieferanten- und Lagerinformationen
   - Preise und Kalkulationen
- **Prozessinformationen:**
   - Freigabezustände, Status, Reifegrad
   - Planung
   - Versionen, Revision
   - Verantwortlichkeiten
   - Änderungsmanagement

Im Allgemeinen gibt es heute keinen zentralen Zugriff auf diese Informationen.

Lösungen, mit denen ein Benutzer ausgewählte Daten aktiv von einem System in ein anderes übertragen kann, sind in vielen Unternehmen bereits im Einsatz. Diese manuelle Übertragung ist zeitaufwendig, kostenintensiv und fehleranfällig. Insbesondere Fehler können erhebliche Folgekosten verursachen.

Aus dem Stand der Technik sind mehrere Lösungsansätze bekannt. Eine Variante besteht darin, synchrone Schnittstellen zum Übertragen der Informationen zu nutzen.

Bei den im Markt befindlichen Systemen zur Kopplung von TDM/PLM und ERP Systemen handelt es sich um Schnittstellen, bei denen der Anwender die Daten mittels einer speziellen interaktiven Funktion synchron an das Zielsystem überträgt.

Dabei werden die Oberflächen der Systeme durch schnittstellenspezifische Funktionen erweitert.

Derartige synchrone Schnittstellen bietet beispielsweise die Möglichkeit einer direkten Rückmeldung, um einen Erfolg oder ein Fehlschlagen einer Aktion zu dokumentieren sowie zusätzliche Interaktionen, wie beispielsweise eine Rückfrage.

Die wesentlichen Nachteile dieses Stands der Technik werden nachfolgend aufgezählt:
- Performance und Mehrarbeit
- Fehlbedienung möglich (spezielle Funktionen müssen geschult werden)
- Fehlende Daten möglich (Synchronisation wird für Objekte vergessen)
- Geringe Fehlertoleranz beim Ausfall einzelner Systemkomponenten
- Systemkenntnisse in den Systemen notwendig

Ein anderer Stand der Technik ist die Verwendung von ImportSchnittstellen.

Importschnittstellen synchronisieren Daten ohne Interaktion. Sie sind eigentlich dazu konzipiert, einen definierten Datenbestand bei Abschalten eines Altsystems in ein neues System zu übernehmen. D. h. zu einem definierten Zeitpunkt werden alle Datensätze (geänderte und unveränderte) im Zielsystem angelegt. Solche Systeme können nur bedingt dazu verwendet werden, Daten im laufenden Betrieb zwischen Systemen zu synchronisieren.

Bei der Nutzung dieser Schnittstellen ist keine Interaktion notwendig. Es kommt nicht zu einer Beeinträchtigung der normalen Arbeitsweise des Benutzers oder gar einem Datenverlust.

Die wesentlichen Nachteile dieses Stands der Technik werden nachfolgend aufgezählt:
- Hohe Latenz (Zeitversatz)
- kein bidirektionales Mapping
- keine Prozessunterstützung

Der Erfindung liegt somit die Aufgabe zugrunde, ein Verfahren zur Synchronisation von Daten zwischen Entwicklungs- und/oder Produktionssteuerungssystemen anzugeben, mit welchem eine vollautomatische, fehlersichere Synchronisation von Daten in miteinander gekoppelten Systemen möglich ist, wobei Beeinträchtigungen der Systeme, der Installations- und der Schulungsaufwand verringert werden.

Gemäß der Erfindung wird die Aufgabe bei einem Verfahren zur Synchronisation von Daten zwischen Entwicklungs- und/oder Produktionssteuerungssystemen der eingangs genannten Art dadurch gelöst, dass eine vollautomatische Synchronisation der Daten des ersten und des zweiten Entwicklungs- und/oder Produktionssteuerungssystems gesteuert durch ein Auslöseereignis mittels eines zwischen den Entwicklungs- und/oder Produktionssteuerungssystemen bereitgestellten Synchronisationsservers erfolgt.

Das Verfahren stellt eine ausfallsichere, zuverlässige und skalierbare Lösung zur vollautomatischen Synchronisation von Daten, wie ^{~}beispielsweise Produktspezifikationen, Dokumenten, (Angebote, Rechnungen, Handbücher, Zeichnungen, ... ), Entwicklungsergebnissen (Virtuelles Produkt Modell), Lieferanten- und Lagerinformationen sowie Preisen und Kalkulationen, zwischen Entwicklungs- und/oder Produktionssteuerungssystemen wie beispielsweise PDM- und ERP-Systemen zur Verfügung. Neben diesen Daten ist auch vorgesehen, weitere Daten, welche beispielsweise Prozessinformationen betreffen, zwischen den Systemen zu synchronisieren. Derartige Prozessinformationen sind beispielsweise Freigabezustände, Status, Reifegrad, Planung, Versionen, Revision, Verantwortlichkeiten und ein Änderungsmanagement.

Diese Synchronisation erfolgt vollautomatisch, gesteuert durch ein Ereignis (Event) auch ohne jede Anwenderinteraktion. Die Datensynchronisation findet zeitnah zum Ereignis und vollautomatisch im Hintergrund statt (asynchrones Verfahren), sodass die normale Arbeitsweise der an den Entwicklungs- und/oder Produktionssteuerungssystemen arbeitenden Anwender nicht beeinträchtigt wird.

In einer Ausführung des Verfahrens ist vorgesehen, dass die Synchronisation zwischen zwei beliebigen Entwicklungs- und/oder Produktionssteuerungssystemen bidirektional erfolgt.

Das Verfahren kann auch als ein bidirektionales Verfahren arbeiten, d. h. die Synchronisation arbeitet in beide Richtungen zwischen zwei Entwicklungs- und/oder Produktionssteuerungssystemen mit gleicher Funktionalität.

In einer Ausführungsform der Erfindung ist vorgesehen, dass die Synchronisation der Daten zwischen zwei beliebigen Entwicklungs- und/oder Produktionssteuerungssystemen asynchron und als ein Hintergrundprozess erfolgt.

Durch die Asynchronität des Systems wird gewährleistet, dass die entstandenen Daten und Prozessinformationen auch nach dem Wiederanlauf in beiden Systemen zur Verfügung stehen, also somit synchronisiert sind. Das empfangende System wird mit den Daten des sendenden Systems versorgt, sodass in beiden Systemen auf Informationen des jeweils anderen Systems zurückgegriffen werden kann. Welches System Sender oder Empfänger für welche Daten ist, wird im Synchronisationsserver durch Regeln festgelegt.

Zur Vermeidung einer Beeinflussung der Arbeit oder von Performanceeinbußen arbeitet das Synchronisationsverfahren im Hintergrund des eigentlichen Entwicklungs- und/oder Produktionssteuerungssystems.

In einer anderen Ausführung des Verfahrens ist vorgesehen, dass vor der Synchronisation eine Optimierung der zu übertragenden Daten durch ein Zusammenfassen mehrerer gleichartiger Synchronisationsaufgaben erfolgt.

Weiterhin sieht das Verfahren vor, eine Optimierung der zu übertragenden Datenmengen vorzunehmen, um Doppelungen zu vermeiden. Beispielsweise durch ein Zusammenfassen mehrerer gleichartiger Synchronisationsaufgaben, welche in der vorliegenden Schrift auch als Aufträge bezeichnet werden, wird dies erreicht. Eine weitere Variante besteht darin, redundante Aufträge zu streichen.

In einer Ausgestaltung des Verfahrens ist vorgesehen, dass das Verfahren mit mehreren parallel arbeitenden Synchronisationsservern arbeitet.

Zur Erhöhung der Ausfallsicherheit des Verfahrens und zur Verteilung der Synchronisationsaufgaben arbeitet das Verfahren mit mehreren parallel geschalteten Synchronisationsservern zwischen einem ersten und einem zweiten Entwicklungs- und/oder Produktionssteuerungssystem.

In einer Ausgestaltungsform der Erfindung ist vorgesehen, dass einer der parallel arbeitenden Synchronisationsserver als zentrale Steuerinstanz die anderen Synchronisationsserver steuert.

In einer alternativen Ausgestaltung der Erfindung ist vorgesehen, dass alle parallel arbeitenden Synchronisationsserver gleichberechtigt ohne eine zentrale Steuerung arbeiten.

Erfindungsgemäß können zwischen zwei Entwicklungs- und/oder Produktionssteuerungssystemen mehrere Synchronisations-Server installiert sein. Diese parallel arbeitenden Synchronisations-Server können mittels ihrer Überwachungskomponenten sowohl eine gegenseitig als auch eine Selbstüberwachung realisieren. Zur Vermeidung von Konflikten zwischen den Synchronisations-Servern werden die Überwachungskomponente eines Synchronisations-Servers zum "Master" und die anderen Synchronisations-Server zum "Slave" ernannt, wobei der "Master" die Überwachungskomponenten der anderen Server überwacht und den eventuellen Ausfall eines "Slaves" über das Benachrichtigungssystem signalisiert.

Dies ist jedoch nicht zwingend erforderlich, sodass in einer alternativen Ausgestaltungsform alle Server gleichberechtigt sind.

In einer besonderen Ausführungsvariante der Erfindung ist vorgesehen, dass nach einer Übergabe eines Synchronisationsauftrags an einen zugeordneten Synchronisationsserver, dieser sich nun in Verarbeitung befindliche Synchronisationsauftrag für alle anderen Server gesperrt wird.

Wird ein Synchronisationsauftrag durch einen der parallel arbeitenden Synchronisationsserver in Bearbeitung genommen, so wird dieser als "in Bearbeitung" befindlich markiert und für andere Synchronisationsserver zur Abarbeitung gesperrt. Somit werden Doppelungen bei der Synchronisation vermieden.

In einer weiteren Ausgestaltung der Erfindung ist vorgesehen, dass nach einer Übergabe eines Synchronisationsauftrags an einen zugeordneten Synchronisationsserver, dieser alle Synchronisationsaufträge, welche die gleichen Objekte bearbeiten, für alle anderen Synchronisationsserver sperrt.

Nachdem ein Synchronisationsauftrag mit einem Objekt in Bearbeitung genommen wird, werden alle Synchronisationsaufträge gesperrt, welche das gleiche Objekt beinhalten und erst nach dessen Abarbeitung wieder freigegeben.

Dies ist notwendig, um Inkonsistenzen aufgrund der parallelen Bearbeitung mit mehreren Servern zu vermeiden, da beispielsweise bei zwei konkurrierenden Änderungen ein späterer Auftrag auf einem Server zuerst ausgeführt werden könnte und ein früherer, älterer Auftrag in einem zweiten Server die vom ersten Server erzeugten Daten mit den älteren Daten überschreiben würde.

In einer Variante der Erfindung ist vorgesehen, dass ein Auslöseereignis ein Ereignis, eine zeitgesteuerte periodische Abfrage oder eine manuelle Eingabe ist.

Beispielsweise durch ein Ereignis auch als Event bezeichnet, welches im ersten oder zweiten Entwicklungs- und/oder Produktionssteuerungssystem stattfindet, kann der verfahrensmäßige Synchronisationsvorgang gestartet werden. Ein derartiges Ereignis kann beispielsweise ein Speichern eines CAD- oder anderen Objekts, das Ändern eines Textfeldes eines Objekts oder eine Änderung bezüglich Status und/oder Reifegrad sein.

Der Verfahrensablauf kann aber auch zeitgesteuert oder durch die Eingabe oder einen Mausklick eines Anwenders gestartet werden.

In einer anderen Ausführungsform der Erfindung ist vorgesehen, dass das Verfahren insbesondere die Prozessschritte
- Eventerfassung,
- Datenanreicherung der Sendedaten,
- Datenfilterung der Sendedaten,
- Datenmapping,
- Synchronisationsbearbeitung mit Datenspeicherung im Empfangssystem,
- Datenmapping für die Rücksynchronisation ins Sendersystem,
- Datenfilterung für die Rücksynchronisation ins Sendersystem,
- Synchronisationsbearbeitung mit Datenspeicherung im Sendersystem und
- Komplette bidirektionale Prozessüberwachung des Gesamtprozesses
umfasst.

Das Verfahren gliedert sich in mehrere nacheinander abzuarbeitende Prozessschritte, welche im Ausführungsbeispiel näher erläutert werden.

Weitere Vorteile des Verfahrens sind die Skalierbarkeit des Synchronisationsverfahrens mit einer beliebigen Anzahl von Synchronisationsservern, eine ausführliche Diagnose und Statusüberwachung mit automatisierten Fehlerkorrekturen und eine Wiederanlauffähigkeit des Systems.

Das hier vorgestellte Verfahren zur Synchronisation ermöglicht eine transparente und performante Vereinigung der verschiedenen Entwicklungs- und/oder Produktionssteuerungssysteme und somit eine einheitliche Sicht der Daten sowohl aus dem Engineering als auch der Unternehmenssteuerung.

Diese Vorgehensweise ermöglicht erstmals das ungestörte Weiterarbeiten des Users auf seinem System, wenn das Empfangssystem von einem Systemausfall oder von geplanten Wartungsarbeiten betroffen ist. Durch die Asynchronität des Systems wird gewährleistet, dass die entstandenen Daten und Prozessinformationen auch nach dem Wiederanlauf in beiden Systemen zur Verfügung stehen und synchronisiert sind.

Somit ergeben sich Vorteile wie keine Performanceeinbußen, keine Fehlermöglichkeiten durch Anwenderinteraktionen, vollautomatischer Ablauf, welcher keine zusätzlichen Interaktionen notwendig macht, Skalierbarkeit, sodass bei wachsendem Datenaufkommen das System durch Zuschalten weiterer Synchronisierungskomponenten an die Anforderungen angepasst werden kann, keine Notwendigkeit von Client Installationen, keine Beeinträchtigung der Funktion bei teilweisem Systemausfall und keine Schulungsmaßnahmen für Mitarbeiter bezüglich der Schnittstellenfunktionalitäten.

In einer anderen Ausgestaltung der Erfindung ist vorgesehen, dass neben der Synchronisation der Daten eine Diagnose und Statusüberwachung sowie eine automatisierte Fehlerkorrektur durchgeführt wird und dass das Verfahren Daten speichert, welche einen Wiederanlauf der Synchronisation nach einer Unterbrechung ermöglichen.

Neben der eigentlichen Synchronisation der Daten zwischen verschiedenen Entwicklungs- und/oder Produktionssteuerungssystemen werden verschiedene Diagnosen von Daten, eine Statusüberwachung sowie eine automatische Fehlerkorrektur realisiert. Somit kann sichergestellt werden, dass beispielsweise
- bei einer gestörten Datenverbindung, die Abarbeitung des Auftrages nach Behebung der Störung automatisch fortgesetzt wird oder
- wenn der Zugriff auf Objekte in einem der Systeme temporär nicht möglich ist (Objekt in Bearbeitung), dies vom System erkannt wird und die gewünschte Aktion später erneut durchgeführt wird. Bei permanentem Misserfolg erfolgt eine automatische Benachrichtigung des Benutzers/Administrators durch das System.
- bei einer Überbelastungen oder sonstigen Systemproblemen (Speichermangel, gestörte Datenverbindungen etc.) eine automatische Benachrichtigung des Administrators erfolgt.

Die Erfindung soll nachfolgend anhand zweier Ausführungsbeispiele näher erläutert werden. In den zugehörigen Zeichnungen zeigen
- Fig. 1: eine typische Oberfläche einer synchronen Schnittstelle nach dem Stand der Technik,
- Fig. 2: eine weitere Darstellung einer Oberfläche einer synchronen Schnittstelle nach dem Stand der Technik,
- Fig. 3: eine Darstellung der Erfindung mit einem Synchronisationsserver und zwei PDM/TDM/ERP Systemen,
- Fig. 4: eine Darstellung des erfindungsgemäßen Synchronisationsservers bei der Speicherung eines abzuarbeitenden Auftrags,
- Fig. 5: eine Prinzipdarstellung des Aufbaus eines gespeicherten Auftrags,
- Fig. 6: eine Abbildung der Struktur eines Auftrags,
- Fig. 7: eine Übersichtsdarstellung mit mehreren Synchronisationsservern,
- Fig. 8: ein Datenflussdiagramm der Synchronisationskomponenten,
- Fig. 9: eine Darstellung eines Zusammenspiels von Auftragsquellen, -filterung und -speicherung,
- Fig. 10: einen Funktionsablauf bei der Auftragsprozessierung,
- Fig. 11: eine Prinzipdarstellung der Gruppierung von Aufträgen nach Objekten,
- Fig. 12: eine Darstellung eines Parallelzugriffs mehrerer Lesekomponenten auf den Auftragsspeicher,
- Fig. 13: eine Darstellung einer Beispieloptimierung durch ein Markieren eines Auftrags als obsolet,
- Fig. 14: eine Darstellung einer Beispieloptimierung durch ein Entfernen eines Auftrags,
- Fig. 15: eine Darstellung einer Beispieloptimierung durch ein Zusammenfassen mehrerer Aufträge zu einem Auftrag,
- Fig. 16: eine Darstellung einer Auswahl des Anreicherungs- und Abbildungsprozesses anhand konfigurierbarer Felder aus dem Auftrag,
- Fig. 17: eine Darstellung eines Anreicherungsprozesses mit systemspezifischem Adapter,
- Fig. 18: eine Darstellung einer Filterung und Abbildung der Auftragsdaten,
- Fig. 19: eine Darstellung einer Erzeugung einer Zielstruktur,
- Fig. 20: eine Darstellung der Übertragung in den Auftragsspeicher der Synchronisierungskomponente des Zielsystems und
- Fig. 21: eine Darstellung eines Festschreibungsprozesses.

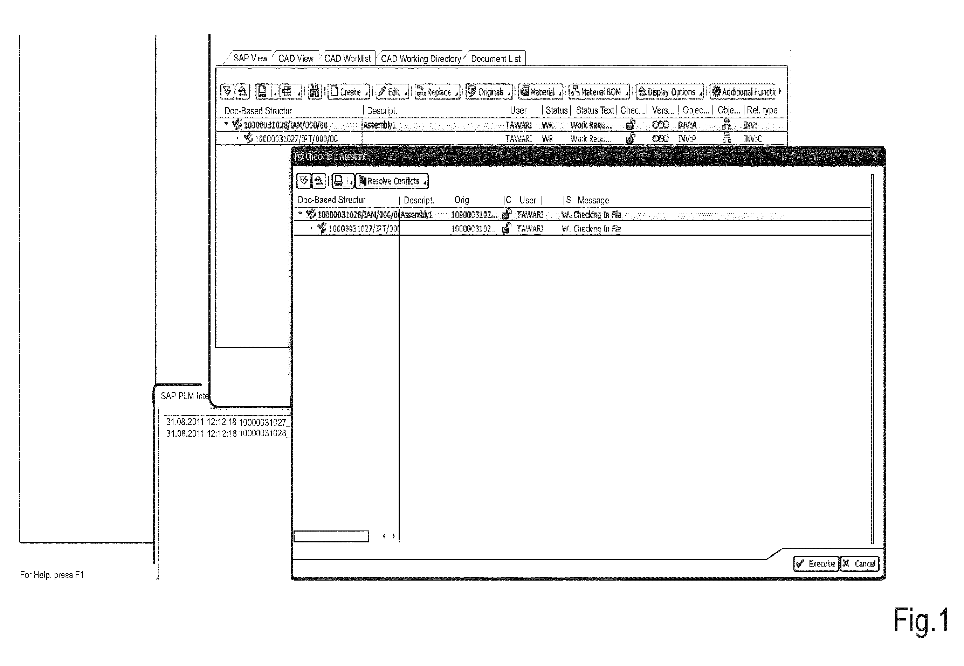

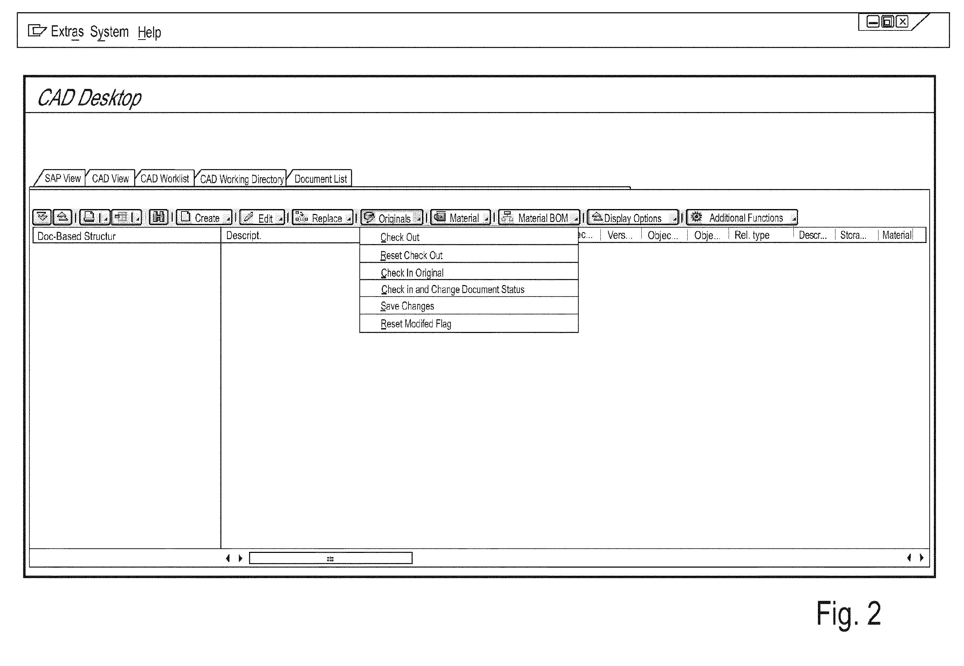

Die Fig. 1 und 2 zeigen typische Oberflächen von synchronen Schnittstellen. Dabei werden Einzelobjekte und Stücklisten berechnet und durch Auswählen einer interaktiven Funktion (Menü, Icon) an das Zielsystem übertragen. Dabei sind häufig komplexe Interaktionen notwendig.

Im Beispiel zeigt die Fig. 1 eine typische Oberfläche in einer ersten Darstellung einer synchronen Schnittstelle aus dem Stand der Technik.

Die Fig. 2 zeigt eine zweite Darstellung einer typischen Oberfläche einer synchronen Schnittstelle.

Dabei stellen die Systeme zur Übertragung der Daten folgende oder ähnliche Funktionen zur Verfügung:
- Objekt Anlegen:
   Erzeugt das Objekt im Zielsystem. Bei dieser Anlage können dann Eingaben in Masken zur Eingabe von Pflichtattributen des Zielsystems hochgeschaltet werden. Somit muss der Anwender die Bedienphilosophie beider Systeme kennen.
- Update eines Objekts:
   Hier aktualisiert der Anwender die Informationen im Zielsystem. Nachdem die Daten im Quellsystem bereits abgelegt wurden, ist ein zusätzlicher Schritt notwendig. Solange dieser nicht erfolgt ist, sind im Zielsystem veraltete Daten.
- Anzeigen des Objektes (aus Zielsystemsicht):
   Hier werden die Attribute des Objektes im Zielsystem angezeigt. Hierzu werden die Daten zu diesem Zeitpunkt aus dem Zielsystem gelesen. Ist das Zielsystem nicht verfügbar, können keine Attribute aus der Zielsystemwelt angezeigt werden.
- Ablegen von Stücklisten:
   Stücklisten werden nicht automatisiert abgeglichen, bei Änderungen der Stückliste müssen diese manuell synchronisiert werden.
- Zuordnen von Objektbeziehungen, Erstellen und Änderungen an Objektbeziehungen müssen über diese Funktion manuell abgeglichen werden.

Der Synchronisationsserver verfolgt den Zweck, Informationen in ERP-, PLM- oder TDM-Systemen zu sammeln, um diese anschließend asynchron und zeitnah an andere ERP-, PLM-, oder TDM-Systeme zu übertragen. Das empfangende System wird mit den Daten des sendenden Systems versorgt, sodass in beiden Systemen auf Informationen des jeweils anderen Systems zurückgegriffen werden kann. Welches System Sender oder Empfänger für welche Daten ist, wird im Synchronisationsserver durch Regeln festgelegt.

In diesen Regeln können
- die Richtung der Datenübertragung,
- Quell- und Zielobjekt aus den jeweiligen Systemen,
- Eigenschaften, Attribute und Daten (Metadaten und Geometriedaten)
festgelegt werden.

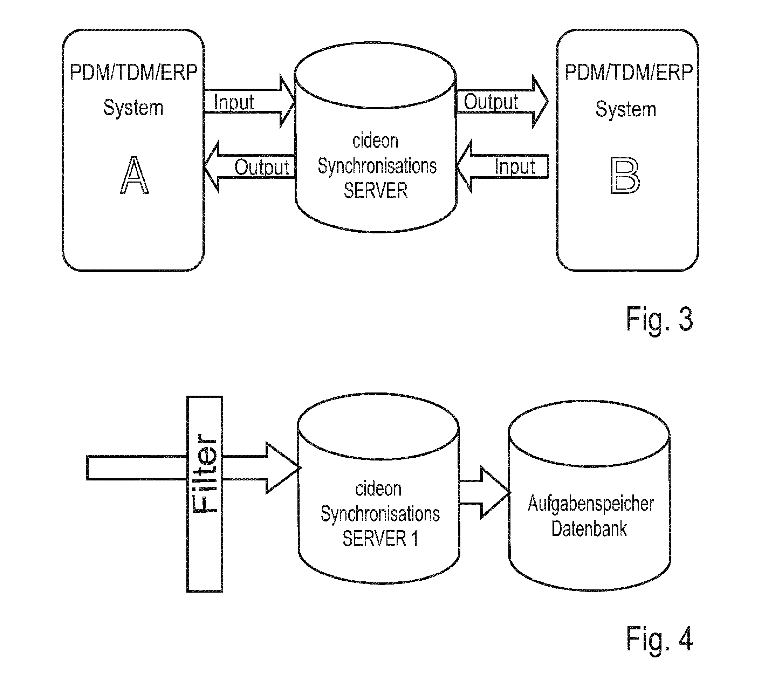

Der Synchronisationsserver, wie er in der Fig. 3 dargestellt ist, empfängt typischerweise Aufträge aus einem PLM, ERP oder TDM System (A), bereitet die Aufträge für die Übergabe an das zu informierende PLM, ERP oder TDM System (B) auf und sammelt alle damit verbundenen Daten- und Prozessinformationen.

Der Synchronisationsserver arbeitet bidirektional, d. h. auch Aufträge aus System (B) werden empfangen, für das zu informierende System (A) aufbereitet und alle damit verbundenen Daten- und Prozessinformationen gesammelt.

Nachfolgend wird das Auftragsmanagement näher beschrieben.

Ein Auftrag kommt beispielsweise durch folgende Auftragsquellen zustande:
- Events im Quell System (PLM/ERP/TDM-System (A) oder (B)) z.B. Speichern eines CAD- oder anderen Objekts, Ändern eines Textfeldes eines Objekts, Ändern von Status oder Reifegrad.
- Manueller Start eines Auftrags durch Paneleingaben oder Mausklicks eines Anwenders im System (A) oder (B) z.B. "Start der Übertragung" (Sonderanwendung)
- Zeitgesteuerte periodische Abfragen im System (A) oder (B) aus denen die zu synchronisierenden Objekte ermittelt werden.

Jeder Auftrag aus den beschriebenen Auftragsquellen führt nicht zwangsläufig zu einem zu prozessierenden Auftrag. Vielmehr wird über Auftragsfilter festgelegt, welcher Auftrag bei Auftragseingängen für eine weitere Bearbeitung im CIDEON-Synchronisationsserver erfasst oder nicht erfasst wird.

Typische Filter hierbei sind:
- Reifegrad eines Teils oder einer Baugruppe Erfassen eines Auftrags erst bei Erreichung eines bestimmten Reifegrades (z.B. "Freigegeben")
   o einer CAD-Zeichnung
   o eines 3D-CAD-Parts
   o einer CAD-Baugruppe
   o eines Engineering Teils
   o einer Engineering Baugruppe/Stückliste
   o einer Variantenstückliste
   o einer Änderungsanfrage
   o eines Änderungsvorganges
- Status eines Teils oder einer Baugruppe Erfassen eines Auftrags erst beim Vorliegen eines oder mehrerer bestimmter Status (z.B. "Freigegeben")
   o einer CAD-Zeichnung
   o eines 3D-CAD-Parts
   o einer CAD-Baugruppe
   o eines Engineering Teils
   o einer Engineering Stückliste
   o einer Variantenstückliste
   o einer Änderungsanfrage
   o eines Dokuments
   o einer Dokumentenstückliste
   o eines Materials
   o einer Materialstückliste
   o eines Änderungsvorganges
- Merkmalswerte von Teilen oder Baugruppen, Erfassen eines Auftrags erst wenn festgelegte Bewertungen von Merkmalen oder Merkmalskombinationen vorliegen.
   o Z.B. Zugehörigkeit zu einer Bauteilgruppe
   o Z.B. Zugehörigkeit zu einem oder mehreren Projekt(en)
   o Z.B. Zugehörigkeit zu einer Anwendergruppe, Inhaber einer Rolle
- Objektzuordnungen (Objektlinks) im PLM/ERP/TDM-System
   o Objektlink von Teilenummern oder Materialstämmen zu CAD-Objekten
   o Objektlink von Änderungsnummern zu CAD-Objekten o Objektlink von Änderungsvorgängen bzw. Änderungsstammsätzen zu Teilen, Materialnummern, Dokumenten, Stücklisten etc.
   o Objektlink von Arbeitsplänen zu Teilen, Materialnummern, Dokumenten, Stücklisten etc.
   o Beliebige weitere Objektlinks im PLM/ERP/TDM-System

Wird ein Auftrag nicht durch Filter ausgefiltert, kommt es zu einer persistenten Speicherung des Auftrags. Dieser Vorgang ist in der Fig. 4 dargestellt.

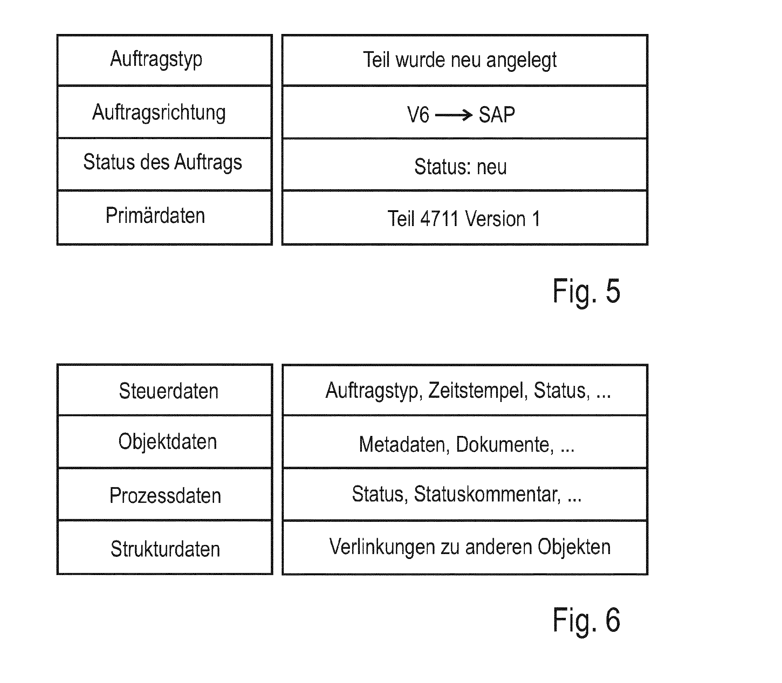

Die Fig. 5 zeigt den grundsätzlichen Aufbau eines gespeicherten Auftrags mit Beispieldaten beim Anlegen eines neuen Teils. In der

Fig. 6 ist eine beispielhafte Struktur eines Auftrags dargestellt.

Zur Abarbeitung der im Auftragsspeicher vorhandenen Aufträge sind 3 Prozessschritte notwendig. Diese bestehen aus den Schritten:
1. Auslesen und Aufbereiten der Daten des Quellsystems (Lesekomponente).
2. Aufbereiten der Auftragsdaten mit Daten des Zielsystems und Schreiben dieser ins Zielsystem (Schreibkomponente).
3. Anstoßen von Konvertierungsprozessen zur Bereitstellung von Neutralformaten (Postprocessing).

Ab einer bestimmten Systemgröße ist eine serielle Abarbeitung der Aufträge nicht mehr möglich. Dies bedingt eine Parallelisierbarkeit des Systems, die bei der Umsetzung der einzelnen Komponenten Berücksichtigung findet. Die Auftragsprozessierung liest die Aufträge aus dem Primärspeicher und wählt anhand der Steuerdaten und des Objekttyps die entsprechenden Algorithmen zum Auslesen und Aufbereiten der Daten des Objekts aus.

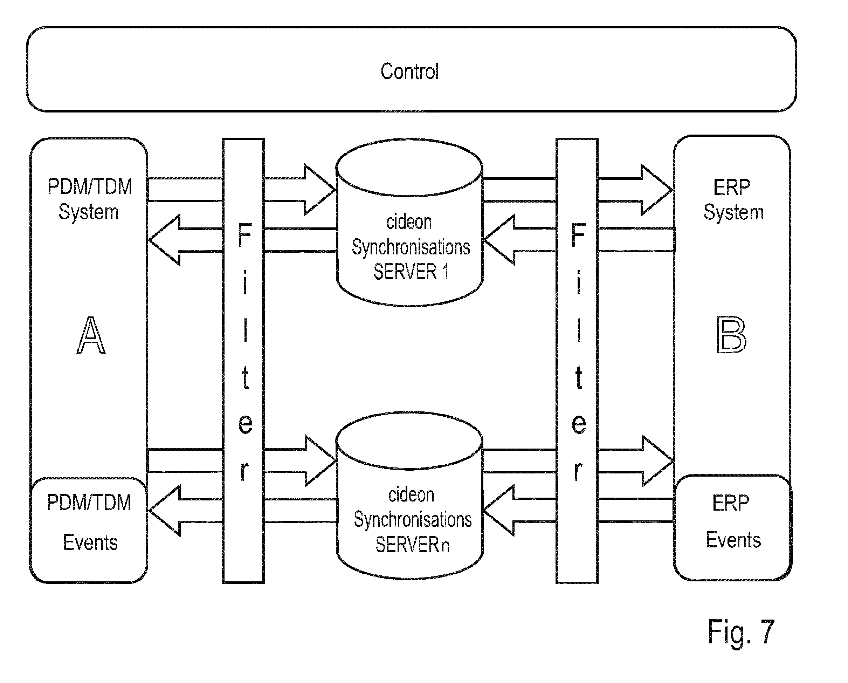

Um eine maximale Skalierbarkeit zu ermöglichen, kann das System aus 1-n Servern bestehen, die selbst wieder 1-n Aufträge parallel abarbeiten können. Der Auftragsbearbeitungsprozess und die einzelnen Komponenten müssen dies berücksichtigen. Der Betrieb mehrerer paralleler Synchronisationsprozesse erhöht die Ausfallsicherheit. Überwacht werden die einzelnen Komponenten von der Prozessüberwachung (Controller), wie in der Fig. 7 dargestellt ist.

Die Lesekomponente liest die vom System erzeugten Aufträge aus, optimiert und bereitet die Aufträge für die weitere Bearbeitung mit Daten aus dem Quellsystem auf. Um eine maximale Skalierbarkeit zu ermöglichen, unterstützt das System die Existenz mehrerer parallel arbeitender Lesekomponenten.

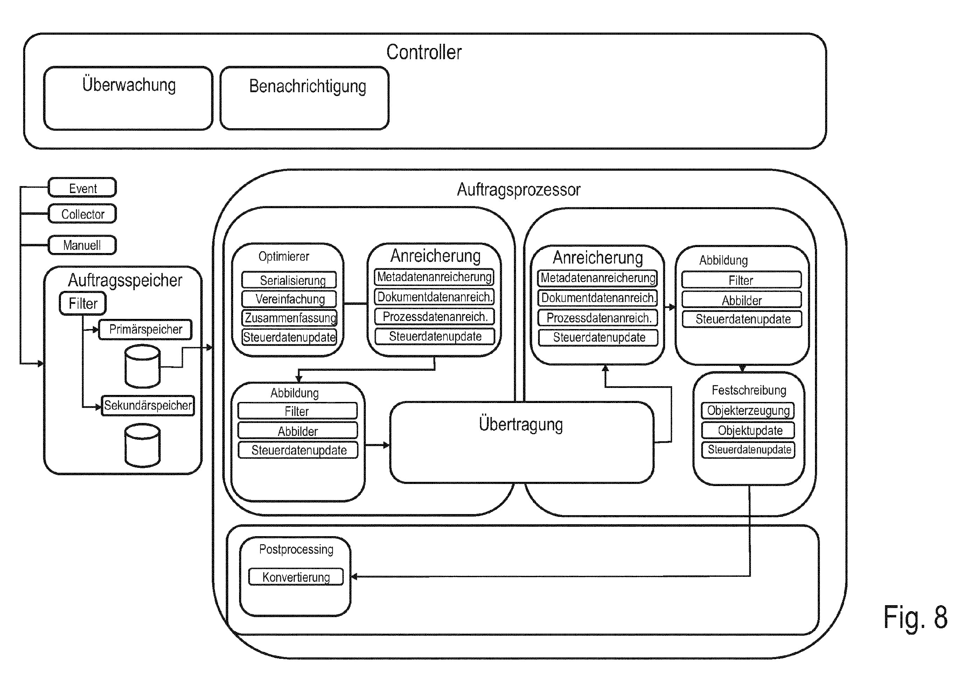

Nachfolgend wird der Serialisierungs- und Optimierungsprozess 1, wie er in der Fig. 8 dargestellt ist, beschrieben.

Aufgrund der parallelen Struktur der Auftragsquellen und der Komplexität der Quellsysteme (hier kann für ein einfaches Event wie Neuanlage, je nach System eine 2-stellige Anzahl von Events erzeugt werden) kommt es in der Praxis zu einer hohen Anzahl von redundanten Aufträgen. Um eine zeitnahe Verfügbarkeit der Daten im Zielsystem zu gewährleisten, ist eine Optimierung unabdingbar.

Aufgrund der notwendigen Parallelisierung ist die natürliche Serialisierung des Ablaufes nicht mehr gegeben. Der Optimierer stellt die Parallelisierbarkeit der Aufträge durch eine eigene Serialisierung sicher.

Der Optimierungsprozess ist konfigurierbar. Dabei werden die Aufträge objektbezogen gruppiert und jede Gruppe anhand der Auftragsdaten (Objekt-, Prozess- und Steuerdaten) vereinfacht und zusammengefasst. Hierbei wird beispielsweise mittels Konfiguration entschieden, dass Aufträge vom gleichen Typ und Status aus der Bearbeitung entnommen werden, wenn in der Liste mehrere dieser Aufträge existieren. Als Ergebnis dieses Prozesses erhält man eine reduzierte Auftragsliste. Im einfachsten Fall der Optimierung bildet diese den Eingabestrom eins zu eins ab.

Nach der Optimierung werden die Steuerdaten (Status, etc.) der Aufträge angepasst und im Auftragsspeicher aktualisiert.

Ein Auftrag ist im Regelfall noch nicht zur Abarbeitung bereit. Häufig werden hierzu weitere Informationen aus dem sendenden System benötigt. Dieser Vorgang wird hier als Anreicherungsprozess, wie im linken Teil der Fig. 8 als Anreicherungsprozess 1 dargestellt, bezeichnet.

Typische Datenanreicherungsprozesse für den CIDEON Synchronisationsserver sind z.B.:
- Beschaffung weiterer Daten aus dem sendenden System.
- Ausleiten von Dokumentdaten aus dem sendenden System und deren Aufbereitung.
   o Spezifikationen
   o Geometriedaten
   o Neutralformate
   o ...

Bei der Objektdatenanreicherung kann der Auftrag aus verschiedenen Quellen mit Zusatzinformationen ergänzt werden. Einfachstes Beispiel ist hier das Lesen weiterer Metadaten des ERP/PLM/TDM-Objekts.

Bei der sogenannten Strukturdatenanreicherung kann der Auftrag aus verschiedenen Quellen mit zusätzlichen Strukturdaten ergänzt werden. Einfachstes Beispiel ist hier das Lesen von Stücklisteninformationen des ERP/PLM/TDM-Objekts.

Bei der Prozessdatenanreicherung kann der Auftrag aus verschiedenen Quellen mit zusätzlichen Prozessdaten ergänzt werden. Einfachstes Beispiel ist hier der Zustand (z.B. Status) des ERP/PLM/TDM-Objekts.

Als weiterer Schritt ermöglicht die Dokumentdatenanreicherung das Auslesen von zugehörigen Dokumenten bzw. Dokumentreferenzen aus dem Quellsystem. Diese können dann in das Zielsystem übertragen oder durch die Dokumentdatenanreicherung aufbereitet werden (z.B. Neutraldatenerzeugung/Datenreduktion/Dokument-manipulationen).

Beim Prozess der Anreicherung der Daten werden die Steuerdaten in einem sogenannten Steuerdatenupdate angepasst, um den weiteren Ablauf der Datensynchronisation zu steuern.

Da im Allgemeinen die Datenmodelle des Quell- und Zielsystems nicht identisch sind, ist eine Abbildung der Strukturen notwendig, wie beispielhaft als Abbildungsprozess 1 auf der linken Seite der Fig. 8 dargestellt ist. Das hier beschriebene System sieht hierfür eine Abbildungsmöglichkeit nach jedem Anreicherungsprozess vor. In diesen Abbildungsprozessen werden die Strukturen des Quellsystems in die Strukturen des Zielsystems überführt.

In der Regel besteht der Abbildungsprozess aus einer Filterkomponente, einer Abbildungskomponente und dem anschließenden Update der Objekt-, Prozess-, Struktur- und Steuerdaten.

Da nach dem Anreicherungsprozess umfangreichere Daten zur Verfügung stehen, kann die Filterkomponente nun diese Daten auswerten und Aufträge aufgrund nicht erfüllter Bedingungen herausfiltern.

Mit den so bearbeiteten Daten wird die Auftragsstruktur aktualisiert (Objekt-, Prozess-, Struktur und Steuerdaten).

Bei diesem Abbildungsprozess können sowohl Wert als auch Typ Konvertierungen durchgeführt werden. Beispielsweise werden folgende Abbildungsvorschriften zwischen den Systemen erfindungsgemäß unterstützt:

| | | | |
|---|---|---|---|
| OBJEKT im System A → OBJEKT im SYSTEM B | Beispiel.: | A:*3D-Part* → B:*Dokument* | |
| OBJEKT im System B → OBJEKT im SYSTEM A | Beispiel: | B: *Material* → A: *Part* | |
| DATENTYP zu OBJEKT in A → DATENTYP zu OBJEKT in B | Beispiel: | <Name> *3D-Part*: | **<string>** |
| | | <Kurztext> Dokument: | **<spring>** |
| DATENTYP zu OBJEKT in B → DATENTYP zu OBJEKT in A | Beispiel: | <Gewicht> *Material*· | **<float>** |
| | | <Gewicht> Part: | **<string>** |

Zwischen den Datentypen können unterschiedlichste Berechnungsvorschriften bestehen, die über Formeln und Tabellen im CIDEON Synchronisationsserver abgebildet werden.

In einem nachfolgenden Schritt erfolgt die Übertragung des Auftrags von der lesenden an die schreibende Komponente. In der Implementierung kann dies beispielsweise durch ein Polling der Schreibkomponente erfolgen. Alternativ wäre auch das Pushen durch die Lesekomponente möglich.

Die Schreibkomponente übernimmt die von der Lesekomponente vervollständigten Aufträge und fügt Daten aus dem Zielsystem hinzu. Diese werden dann zum Schreiben aufbereitet und können bei Bedarf nochmals optimiert werden. Schließlich werden die Daten ins Zielsystem geschrieben und gegebenenfalls Postprocessing-Aufträge erzeugt.

Bevor die Daten in das Zielsystem geschrieben werden, können diese hier nochmals mit Daten des Zielsystems vervollständigt werden. Dieser Ablauf, welcher in der Fig. 8 auf der rechten Seite als Anreicherungsprozess 2 dargestellt ist, entspricht dem oben beschriebenen Anreicherungsprozess 1.

Ein weiterer Abbildungsprozess, als Abbildungsprozess 2 in der Fig. 8 rechts dargestellt, ermöglicht die Kombination von Daten aus beiden Systemen, um das Ergebnis der Bearbeitung in das Zielsystem zu schreiben. Der interne Ablauf ist analog zum oben beschriebenen Abbildungsprozess 1.

Nach dem die Auftragsdaten vollständig aufbereitet sind, können im Zielsystem die notwendigen Objekte angelegt bzw. aktualisiert und zugehörige Dokumente im Zielsystem abgelegt werden. Dies erfolgt in dem rechts in der Fig. 8 dargestellten Kasten Festschreibung. Die Steuerdaten und Objektdaten des Auftrags werden danach aktualisiert.

Während der Bearbeitung stellt das System die Daten in der Art bereit, dass im Zielsystem eine Nachbearbeitung der Daten über Konvertierungslösungen oder Ähnliches unterstützt wird. Dies kann z. B. die Bereitstellung von Neutralformaten (3D, 2D) sein. Dabei kann diese in der Fig. 8 im Kasten Postprocessing dargestellte Konvertierung sowohl durch Mechanismen des Zielsystems als auch durch den Festschreibungsprozess des Systems ausgelöst werden.

Um ein Höchstmaß an Stabilität zu gewährleisten, verfügt das System über einen Überwachungsmonitor (Controller) zur Prozessüberwachung. Dieser prüft kontinuierlich den Systemzustand und ermöglicht dem Administrator sich einen Überblick über das System zu verschaffen. Beim Auftreten von Systemwarnungen und Fehlern kann der Administrator frühzeitig durch den Controller informiert werden (z.B. über Email, SMS, ... ).

Der Controller verwendet dazu folgende Mechanismen:
- Abfragen des Komponentenzustands (läuft das System noch?)
- Interpretation von Systemevents und Logs
- Analysen der Auftragsspeicher
- Überwachung von Primär- und Sekundärspeicher (u.a. auf Speichermangel)

Das System unterstützt 3 Arten von Auftragsquellen:
- Zur Implementierung von Event-basierten Aufträgen bieten die TDM-/PLM-/ERP-Systeme Einhängepunkte zum Anpassen und Steuern des Kundenprozesses. Diese Möglichkeiten sind dafür gedacht, um beispielsweise Eingabefelder zu überprüfen, zu vervollständigen oder den Prozess aufgrund fehlender/falscher Benutzereingaben zu unterbinden. Diese werden vom System verwendet, um beim Speichern, Ändern eines Textfeldes eines Objekts, Strukturänderungen, Ändern von Status oder Reifegrad einen Auftrag zu erzeugen.
- Zur Implementierung von manuellen Auftragsstarts bieten die TDM-/PLM-/ERP-Systeme Möglichkeiten, das Benutzer-Interface zu erweitern. Diese können dazu verwendet werden, um dem Benutzer die Möglichkeit zu geben, die Synchronisation eines Objektes manuell anzusteuern.
- Bei der zeitgesteuerten periodischen Abfrage wird ein externer periodisch ablaufender Prozess implementiert, der zu synchronisierende Objekte anhand bestimmter Eigenschaften (z.B. letztes Änderungsdatum) ermittelt und für diese Synchronisationsaufträge erzeugt.

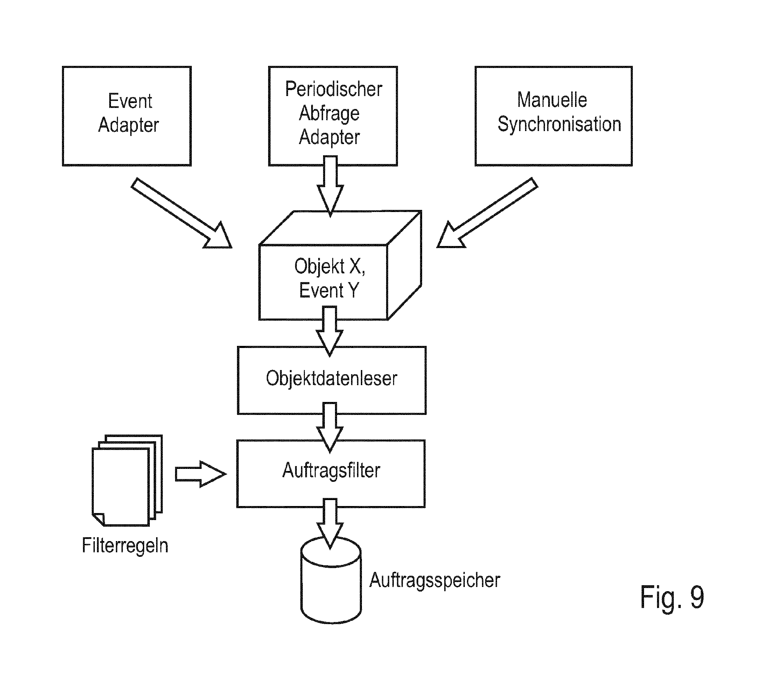

Bevor die Aufträge in den Auftragsspeicher geschrieben werden, wird über den Auftragsfilter bestimmt, ob eine Synchronisation notwendig ist. Die Fig. 9 zeigt das Zusammenspiel von Auftragsquellen, -filterung und -speicherung.

Zur Durchführung der Event-basierten Synchronisation gibt es einen quellsystemspezifischen Adapter. Dieser implementiert die Einsprungspunkte für die folgenden Aktionen mittels der im System vorhandenen Erweiterungspunkte.
- Create, modify, delete
   Im Quellsystem wird ein neues Objekt angelegt, geändert oder gelöscht.
- Copy
   Im Quellsystem wird eine Kopie eines bereits existierenden Objekts erstellt.
- Revision/Version
   Im Quellsystem wird eine neue Version eines bereits existierenden Objekts erstellt.
- Connect, disconnect
   Im Quellsystem wird ein Objekt mit einem anderen Objekt verknüpft bzw. die Verknüpfung getrennt (u.a. Aufbau und Ändern von Baugruppen).
- Checkin, checkout, removefile
   Im Quellsystem wird ein Dokument hinzugefügt, geändert oder entfernt.
- Lock, unlock
   Im Quellsystem wird ein Objekt gelockt oder entlockt.
- Promote, demote
   Im Quellsystem wird der Status eines Objekts gewechselt.

Aus der Aktion und den betroffenen Objekten inklusive Objektdaten, die beim Erweiterungspunkt zur Verfügung stehen, wird ein Datensatz gebildet. Werden für den nachfolgenden Filterprozess weitere Daten benötigt, werden diese nun gelesen (Objektdatenleser). Aus Performancegründen darf dieser Leseprozess nur ausgeführt werden, wenn die vom Erweiterungspunkt zur Verfügung gestellten Daten unzureichend sind. Des Weiteren werden nur die absolut notwendigen Daten gelesen. Auch dieser auf Geschwindigkeit optimierte Objektdatenleser ist eine, für jedes zu unterstützendes System, zu entwickelnde Komponente.

Nach der Bereitstellung der Auftragsdaten durch den systemspezifischen Adapter und Leseprozess kann eine Filterung des Auftrags erfolgen. Hierzu wird anhand der Auftragsdaten über die Filterkonfiguration entschieden, ob und wie ein Auftrag weiterverarbeitet wird.

Die Konfiguration bietet hierbei folgende Möglichkeiten:
- Bedingungen
   o Wenn ... dann ... sonst ...
   o Auswahl
- Vergleiche
   o größer
   o kleiner
   o gleich
   o ungleich
- Stringoperationen
   o Ersetzung
   o Substring
   o Toupper
   o Tolower
- Erzeugen, Duplizieren, Löschen und Umbenennen von Elementen
- Konstanten
- Umwandeln von numerischen Texten in Zahlen
- Umwandeln von Zahlen in Zeichenketten
- Rechenoperationen
   o Aufrunden, Abrunden
   o Addieren
   o Subtrahieren
   o Multiplizieren
   o Dividieren
   o Diverse weitere mathematische Formeln
- Formatieren
   o Ersetzen von Tausender- und Dezimaltrennzeichen o Anwenden eines Ausgabemusters
   o Formatieren der Zahlendarstellungen (z.B. wissenschaftliche Darstellung)

Die so über die Konfiguration ermittelten Auftragsdaten und Auftragstypen werden, wenn nicht ausgefiltert, in den Auftragsspeicher übertragen.

Bei der periodischen Abfrage werden die zu synchronisierenden Objekte anhand einer konfigurierbaren Abfrage ermittelt. Die Syntax dieser Abfrage orientiert sich an der systemspezifischen Abfragesprache. Die durch die Abfrage ermittelten Objekte werden mit dem Kennzeichner "periodische Abfrage" versehen und anhand des obigen Schemas mit dem Objektdatenleser weiterverarbeitet. Durch diesen Kennzeichner können beim Filtern andere Regeln angewandt werden wie beim Event-basierten Synchronisieren.

Der manuelle Auftragsstart bietet dem Benutzer die Möglichkeit, eine Synchronisation explizit anzustarten. Das zu synchronisierende Objekt wird mit dem Kennzeichner "manuell" versehen und anhand des obigen Schemas mit dem Objektdatenleser weiterverarbeitet. Auch hier kann anhand des Kennzeichners ein anderes Filterverhalten verwirklicht werden. Somit können hier auch Objekte synchronisiert werden, die bei der Event-basierten Synchronisation aufgrund der Filterregeln nicht synchronisiert werden.

Eine einfache Möglichkeit mit obigen Filterregeln Aufträge auszufiltern ist die Implementierung der Regel als boolsche Funktion. D. h. der Ausdruck benutzt die Daten des Datensatzes und evaluiert auf wahr oder falsch. Der Auftrag wird dann erzeugt oder ausgefiltert.

Man kann den Filter aber auch erweitern, sodass er aufgrund der Eingangsdaten einen spezifischen Steuerdatensatz (Auftragsklassifizierung) erzeugt, der dem Auftrag zugefügt wird.

Anhand der Filterregeln wird also eine Klassifizierung ausgeleitet mittels derer die weitere Verarbeitung des Auftrags gesteuert wird (z.B. nur Metadaten synchronisieren oder Metadaten und Grafik synchronisieren, ... ). Diese Klassifizierungsdaten bilden dann zusammen mit weiteren Steuerdaten (Status, Zeitstempel, ...) und den Auftragsdaten eine Konkretisierung des Auftrags. Auch wird anhand dieser Klassifizierung entschieden, ob der Auftrag in den Auftragsspeicher gespeichert wird oder verworfen werden kann.

Um ein Höchstmaß an Ausfallsicherheit zu gewährleisten, wird der Auftragsspeicher als Mehrschichtenmodell umgesetzt. Dies bedeutet, dass beim Speichern versucht wird, die Auftragsdaten in den Primärspeicher zu speichern. Schlägt dies fehl, wird ein weiterer Speicher, der sogenannte Sekundärspeicher, befüllt. Dieses Verfahren kann n-fach fortgesetzt werden. Schlägt auch der n-te Speicherversuch fehl, werden die Aufträge in einer Logdatei festgehalten. Aus der Logdatei können diese dann später in den Auftragsspeicher eingespeist werden.

Beispielsweise könnte eine zweistufige Speichervariante wie folgt implementiert werden:
Es wird versucht, den Auftrag in einer Datenbank (Primärspeicher) abzulegen. Dabei kommt es zu einem Fehler, da der Datenbankserver nicht erreichbar ist. Nun greift der Sekundärspeicher. Die Auftragsdaten werden im Filesystem gesichert. Aufgrund von Speichermangel schlägt auch dies fehl.

Schließlich werden die Daten speziell gekennzeichnet in die Logdatei auf einem anderen Datenträger geschrieben. Aus den Sekundärspeichern oder der Logdatei werden die Aufträge über die Prozessüberwachung wieder in den Primärspeicher übernommen.

Da es sich bei der Synchronisation der TDM-/PLM-/ERP-Systeme mit Synchronisations-Server im Allgemeinen um ein verteiltes System handelt, bei dem einzelne Komponenten unter Umständen weltweit verteilt sind, stellt sich die Frage, wo in einer solchen Landschaft der Auftragsspeicher anzuordnen ist.

Da der Auftragsspeicher Teil des Synchronisationssystems ist, besteht die Möglichkeit, ihn direkt an den Synchronisations-Server zu koppeln.

Vorteile sind:
- Vergleichsweise gleicher Abstand zu Quell- und Zielsystem.
- Geringere Ausfallwahrscheinlichkeit für den Zugriff vom Synchronisations-Server.

Nachteile sind:
- Aufgrund des räumlichen Abstands führt diese Anordnung zu einer schlechteren Performance.
- Besteht kein Zugriff vom Quellsystem auf den Synchronisations-Server (beispielsweise Netzwerkausfall kann nur noch eine der Fallbacklösungen zur Speicherung der Auftragsdaten verwendet werden. Da bei einer verteilten Synchronisationsumgebung solche Ausfälle wahrscheinlich sind, wirkt sich dies Negativ auf das System aus.

Ordnet man den oder die Auftragsspeicher am Quellsystem an, kann man einige der genannten Nachteile vermeiden.

### Vorteile:

- Minimale Performanceverluste beim Schreiben der Aufträge.
- Geringere Ausfallwahrscheinlichkeit aufgrund der Nähe des Auftragsspeichers zur Auftragsquelle.

### Nachteile:

- Größerer Abstand zum Zielsystem.
- Keine Auftragsbearbeitung bei Ausfall der Verbindung zwischen Quellsystem und Synchronisations-Server.

Da Probleme beim Persistieren der Aufträge höher zu werten sind als kurzzeitige Synchronisationspausen aufgrund fehlender Verbindung, hat beim Vergleich dieser Punkte die Anordnung am Quellsystem einen Vorteil. Eine Lösungsmöglichkeit zum Problem des größeren Abstands des Zielsystems wird in einem der nachfolgenden Absätze erörtert.

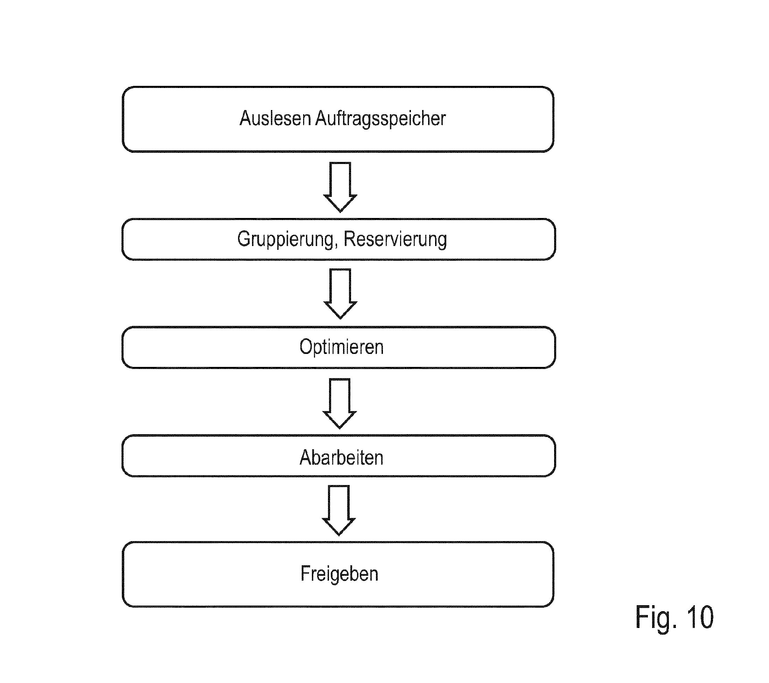

Nachdem die Aufträge im Auftragsspeicher angelegt wurden, werden Sie von den Lesekomponenten der verschiedenen Server ausgelesen. Die Fig. 10 zeugt beispielhaft die Funktionsweise einer dieser Lesekomponenten.

Dabei greifen die Lesekomponenten parallel auf den Auftragsspeicher zu. Um diesen parallelen Zugriff zu gewährleisten, erfolgt eine Gruppierung und Reservierung nach Objekt IDs.

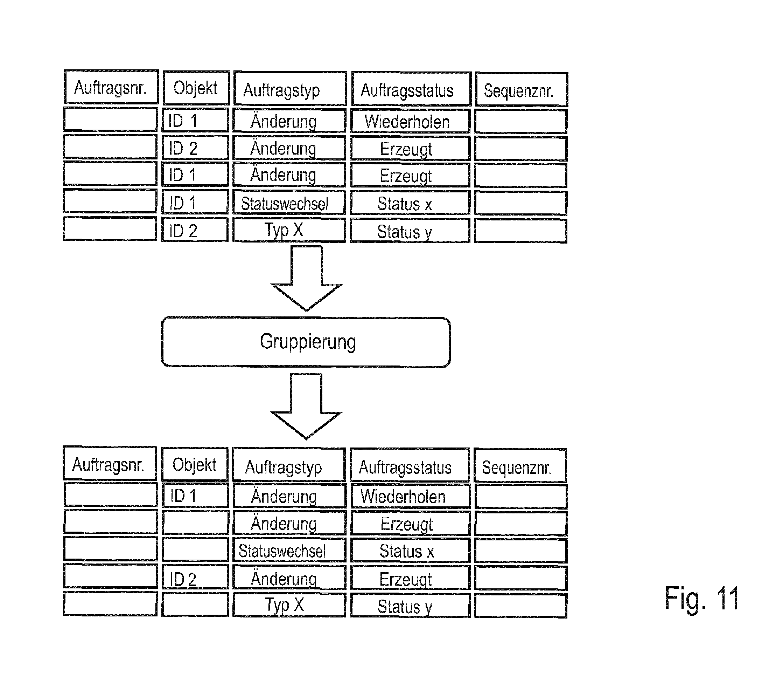

In der Fig. 11 ist ein Beispiel für eine Gruppierung von Aufträgen nach Objekten dargestellt.

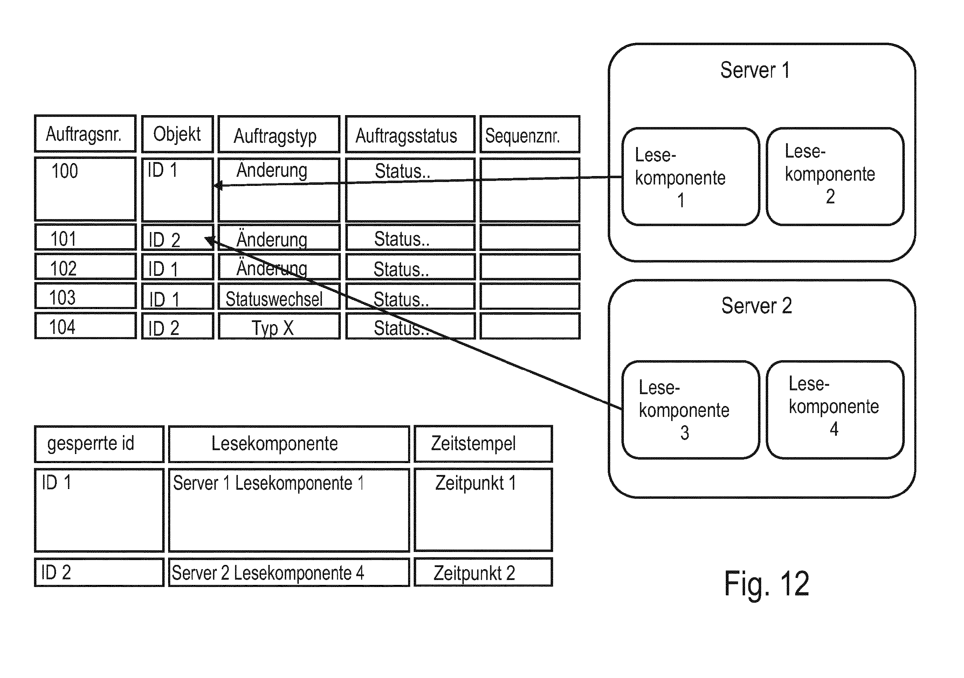

In der Fig. 12 erfolgt der Zugriff auf den Auftragsspeicher von 2 Synchronisationsservern mit jeweils 2 Lesekomponenten. Jede der Lesekomponenten liest aus dem Auftragsspeicher n freie (noch nicht reservierte) IDs, zu denen es Aufträge in einem Bearbeitungsstatus gibt, unter Berücksichtigung ihrer Sequenz (notwendige Bearbeitungsreihenfolge) aus. Nun versucht die Lesekomponente, die einzelnen IDs für sich zu reservieren. Der entsprechende Reservierungsspeicher speichert hierfür die Objekt ID, die eindeutige ID der Lesekomponente und den Zeitpunkt des Eintrags im Reservierungsspeicher. Für die IDs, die für die Komponente reserviert werden konnten, werden nun die zugehörigen Aufträge optimiert und weiter bearbeitet. Hierzu werden für jede von der Lesekomponente gesperrten ID die Aufträge aus dem Auftragsspeicher gelesen, welche sich in einem Bearbeitungsstatus (Neu, Fehler, Wiederholen, ... ) befinden. Die so ermittelte Auftragsliste wird an die Optimierung und Bearbeitung übergeben. Nach Abschluss des Bearbeitungsprozesses wird die Reservierung wieder gelöscht.

In der Fig. 12 lesen also alle 4 Lesekomponenten die Objekt IDs ID1 und ID2 aus. Nun reserviert Lesekomponente 1 ID1. Die Lesekomponente 3 kann ID1 nicht mehr reservieren, da diese von der Lesekomponente 1 gesperrt ist, und reserviert ID2 für sich. Hierfür werden im Reservierungsspeicher die jeweiligen Einträge gemacht. Für Lesekomponente 2 und Lesekomponente 4 gibt es keine freien IDs mehr, daher bleiben diese bis zum Eintreffen neuer Aufträge untätig. Lesekomponente 1 liest nun alle Aufträge zu ID1. Im Konkreten sind dies die Aufträge mit der Nummer 100, 102 und 103. Die Lesekomponente 3 liest die zu der ID2 gehörigen Aufträge 101 und 104. Nachdem beide Lesekomponenten jeweils die Aufträge optimiert und bearbeitet haben, entsperren sie im Anschluss wieder die jeweilige ID, d. h. Lesekomponente 1 entsperrt ID1 und Lesekomponente 3 entsperrt ID2.

Nachdem eine ID gesperrt wurde und alle zu dieser ID zugehörigen Aufträge ausgelesen wurden, wird vor dem Abarbeiten der Aufträge zunächst in einem Optimierungsschritt versucht, die Auftragsliste zu minimieren, um die Abarbeitung so performant wie möglich durchzuführen. Dies geschieht, indem durch ein variables Regelwerk redundante Aufträge ermittelt und diese dann entfernt bzw. als obsolet gekennzeichnet werden. Die Optimierung bearbeitet hierbei die Auftragsliste und wendet die Regeln auf die einzelnen Positionen an.

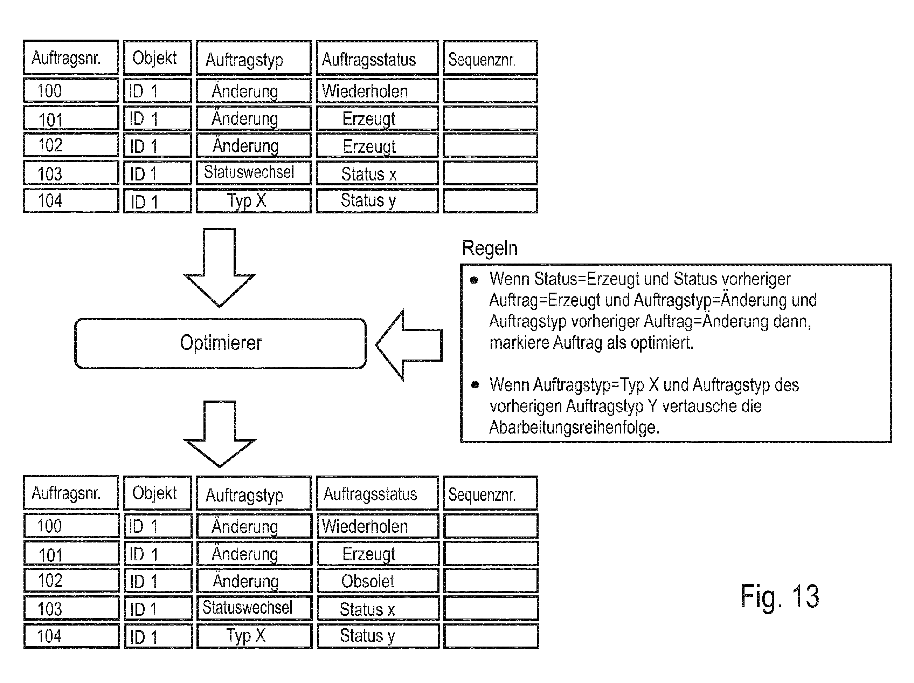

Die Fig. 13 zeigt ein Beispiel für eine Auftragsliste, die anhand von Regeln optimiert wird. In der Auftragsliste gibt es 2 Aufträge, die durch eine Änderung des Objekts entstanden sind. Im Regelwerk ist eine Regel hinterlegt die einen Auftrag des Typs Änderung und Status Erzeugt kennzeichnet (hier den Status auf Obsolet setzt) wenn es bereits Aufträge vom Typ Änderung mit Status Erzeugt in der Liste gibt und nimmt diese damit aus der weiteren Bearbeitung heraus.

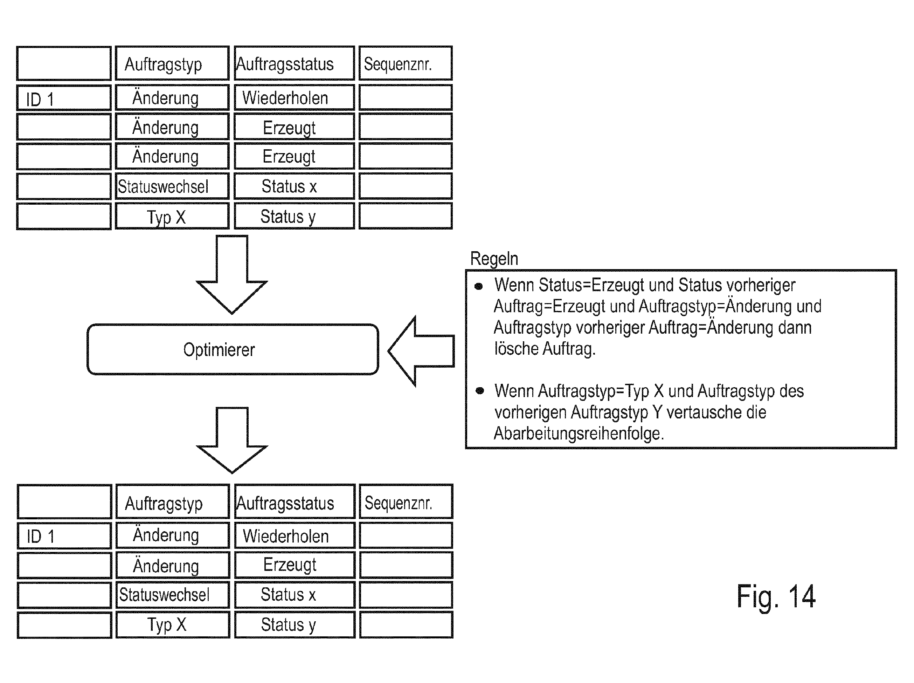

Alternativ kann auch eine Regel erstellt werden, die Aufträge komplett aus der Liste und dem Auftragsspeicher entfernt, wie in der Fig. 14 dargestellt.

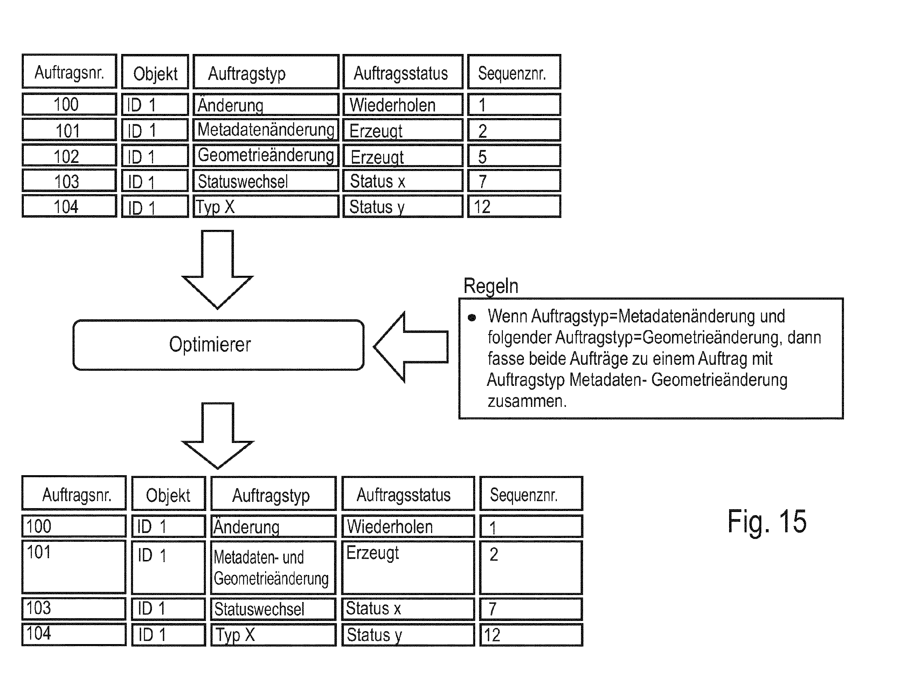

Als weitere Möglichkeit kann der Optimierer über sein Regelwerk auch mehrere Aufträge zu einem Auftrag zusammenfassen, einen neuen Auftrag erzeugen bzw. einen Existierenden kopieren. Die Verfahrensweise des Zusammenfassens mehrerer Aufträge zu einem Auftrag ist in der Fig. 15 dargestellt.

Der Optimierungsprozess bietet über das Regelwerk die nachfolgend beispielhaft aufgeführten Möglichkeiten:
- Wahlfreien Zugriff auf alle in der Auftragsliste enthaltenen Aufträge (insbesondere auf Vorgänger und Nachfolger in der Liste)
- Lesezugriff auf Steuerdaten, Objektdaten und Prozessdaten und Strukturdaten der Aufträge (insbesondere Auftragstyp, Status, Sequenz)
- Konstanten (Zeichenketten, Nummern, ... )
- Vergleiche zwischen diesen gelesenen Daten und/oder Konstanten (gleich, größer, kleiner)
- Einfache mathematische Operationen zwischen den gelesenen Daten (addieren, subtrahieren, multiplizieren, dividieren, ... )
- Zeichenoperationen (Ersetzung, Substring, toUpper, toLower, ... )
- Erzeugung neuer Aufträge
- Kopieren von Aufträgen
- Löschen von Aufträgen

Als Abschluss der Optimierung kann der Auftragsdatensatz im Auftragsspeicher zwischengespeichert werden. Hier kann unter anderem Status und Statuskommentar zwischengespeichert werden.

Somit ist ein Wiederanlaufen des Prozesses von diesem Speicherstand, beispielsweise bei einem Ausfall der Datenverbindung, möglich.

Die optimierte Auftragsliste wird nun vom Auftragsprozessor bearbeitet. Dabei werden die zum Objekt gehörigen Aufträge aus der optimierten Auftragsliste vervollständigt und abgebildet.

Aufgrund der Diversität der zu synchronisierenden Objekte im Ausgangssystem sind unterschiedlichste Prozesse zur Anreicherung des Auftrags mit Daten aus dem Ausgangssystem notwendig. Deshalb wird anhand der Auftragsdaten der zu verwendende Anreicherungs- und Abbildungsprozess gewählt.

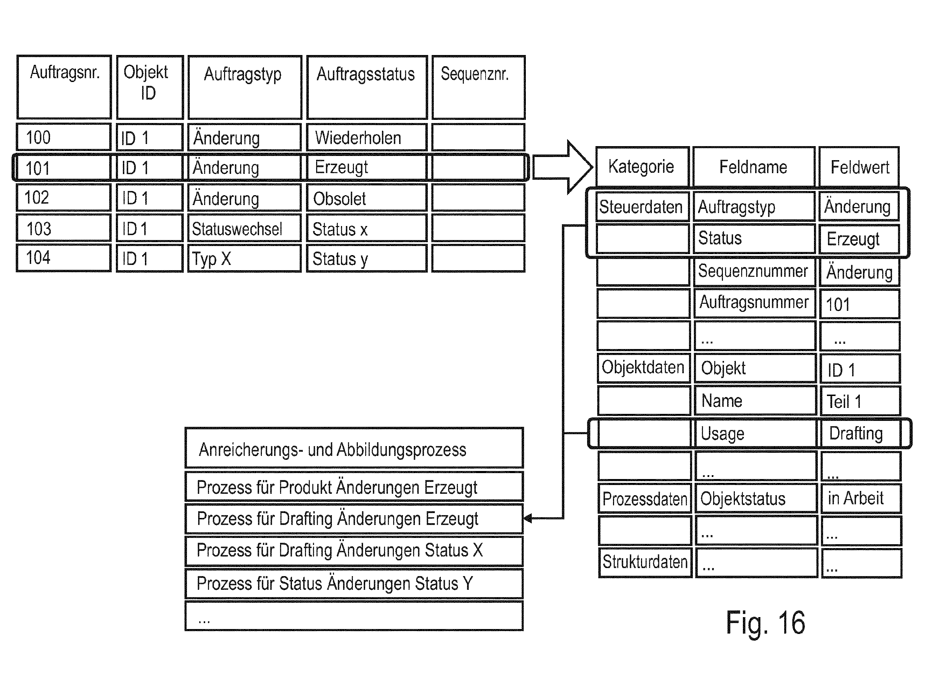

Die Fig. 16 zeigt die Auswahl eines Anreicherungs- und Abbildungsprozesses anhand dreier Felder des Auftrags. Die Anzahl und welche Felder zur Auswahl verwendet werden, ist konfigurierbar. Im Beispiel ist zur Auswahl des Anreicherungs- und Abbildungsprozesses Auftragstyp, Status (aus den Steuerdaten) sowie Usage (aus den Objektdaten) als Auswahlkriterium konfiguriert. Als Ergebnis wird die weitere Bearbeitung des Auftrags der "Prozess für "DraftingÄnderungenErzeugt" verwendet.

Würden bei der Eventauslösung bereits alle für die Übertragung benötigten Daten ausgelesen, könnte dies zu einer Performanceverschlechterung für den Anwender führen. Um das Ziel zu erreichen, dass das System performant bleibt, werden diese Daten erst im Anreicherungsprozess gelesen.

Über die "Auswahl für die weitere Bearbeitung" wurde anhand der Auftragsdaten einer der vom System bereitgestellten Anreicherungsprozesse ausgewählt. Dies ist insbesondere notwendig, da die auszulesenden Daten vom Event und dem zugehörigen Objekt abhängig sind. So werden beispielsweise für die Übertragung einer geometrischen Änderung andere Daten aus dem Quellsystem benötigt als bei einer Statusänderung. Auch können zum Auslesen der Daten von verschiedenen Objektarten, abhängig vom verwendeten Quellsystem, unterschiedliche Quellsystem-APIs benötigt werden.

Im Folgenden wird die prinzipielle Arbeitsweise aller Anreicherungsprozesse beschrieben.

Zum Auslesen der Anreicherungsdaten muss für jedes Quellsystem eine entsprechende Adapterkomponente geschrieben werden. Diese Komponente erhält als Input die Auftragsdaten und liefert in einem ersten Schritt als Ergebnis Metadaten und die Relationen zu anderen Objekten des zu prozessierenden Quellsystemobjekts. In einem zweiten Schritt werden dann die ans Zielsystem zu übertragenden Dokumente aus dem Quellsystem kopiert und/oder Referenzen zum Zugriff auf diese erzeugt. Somit ist es je nach Konfiguration möglich, im Zielsystem Kopien der Dokumente anzulegen oder auch direkt aus dem Zielsystem auf die Originaldokumente im Quellsystem zuzugreifen. Um möglichst effizient zu arbeiten, kann über die Adapterkonfiguration entschieden werden, welche Informationen zum Objekt ausgelesen werden (Einschränkung der auszulesenden Metadatenfelder, Einschränkung der zu lesenden Relationen auf bestimmte Typen, ... ) und welche Dokumente berücksichtigt werden.

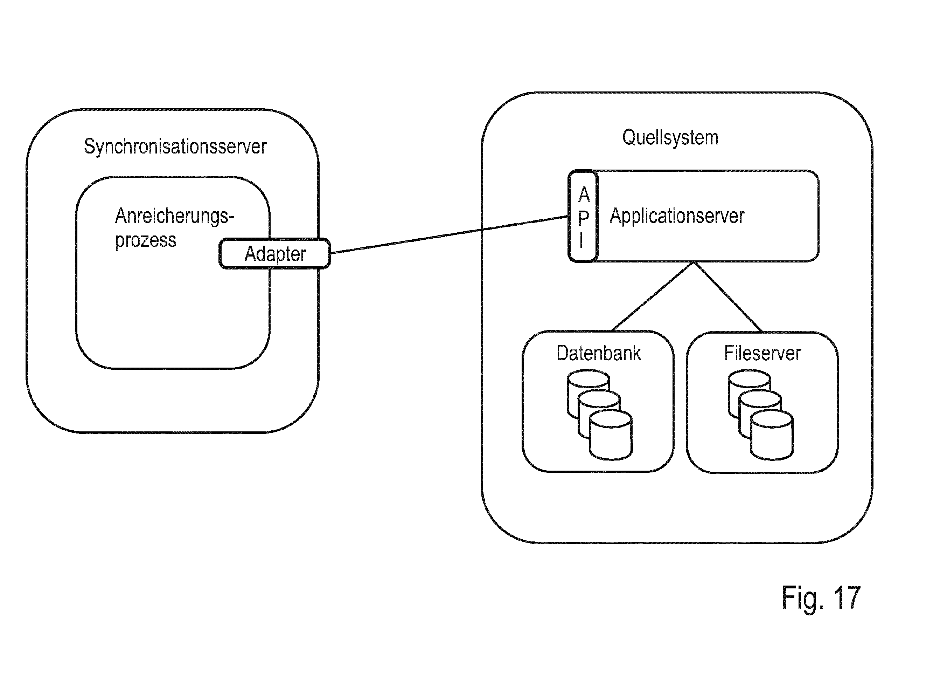

Wie in Fig. 17 dargestellt, übergibt der Anreicherungsprozess die im Auftrag enthaltenen Daten an einen quellsystemspezifischen Adapter. Dieser Adapter bestimmt aus seiner Konfiguration und ausgewählten Feldern des Auftrags (Auftragstyp, Objectid, Status, bereits bei Eventauslösung bereitgestellte Objektdaten) die benötigte Abfrage und benutzt die Schnittstelle des Quellsystems, um die Daten auszulesen. Je nach System wird hierzu eine einfache Abfragesprache (SQL oder Derivate), eine Fourth-Generation-Language (ABAP, ... ) oder eine einfache API (C, Java, Web Services) verwendet. Intern greift das Quellsystem hierzu auf seine Datenbank(en) und Fileablagen (Fileserver) zu. Die Ausgabestruktur (siehe unten) wird noch ohne Dokumentdaten den Auftragsdaten hinzugefügt und der so entstandene Auftragsdatensatz mittels Dokumentanreicherungskomponente um die Dokumentdaten vervollständigt.

Hierzu wird der Dokumentenanreicherungskomponente der Auftragsdatensatz übergeben und diese erzeugt je nach Konfiguration eines oder mehrere der folgenden Ergebnisse:
1. Verweis auf Original im Quellsystem erzeugen.
2. Bereitstellen einer Kopie der Originaldatei zum Einchecken im Zielsystem.
3. Bereitstellen eines Neutralformats direkt aus dem Quellsystem über vom Quellsystem bereitgestellte Tools, wenn dieses unterstützt wird.
4. Auschecken der Originaldatei und Anstoßen eines Konvertierungsprozesses. Bereitstellen der Konvertierungsergebnisse (Dateien) zum Einchecken ins Zielsystem.

So können von einem Objekt auch mehrere Dokumente erzeugt werden (z. B. wenn im Quellsystem mehrere verschiedene Dokumente dem Objekt zugeordnet sind) oder es können sowohl Verweis als auch Original und/oder Neutralformat übertragen werden.

Die um die Dokumentdaten erweiterte Ausgabe-Struktur wird im Folgenden erläutert. Zur weiteren Bearbeitung wird diese an den Anreicherungsprozess übergeben.
- Stammdaten des Objekts systemabhängige Stammdaten des Objekts als Tabelle (Feldname) Feldwert). Über die Adapterkonfiguration (im Adapter konfigurierbar, alle oder nur ausgewählte Felder) 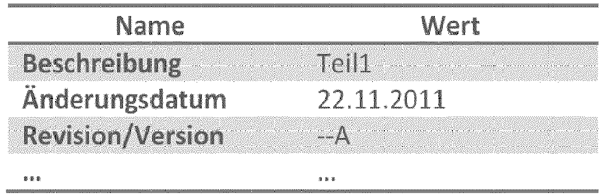
- Prozessdaten des Objekts (können auch als Teil von Stammdaten und Relationen übergeben werden) Prozessdaten wie Status, Vorgangsnummern, ... und Beziehungen zu Änderungsanträgen, -aufträgen, ...
- Attribute des Objekts
   Attribute und kundenspezifische Erweiterungen am Datenmodell des Quellsystems (im Adapter konfigurierbar, alle oder nur ausgewählte Felder) 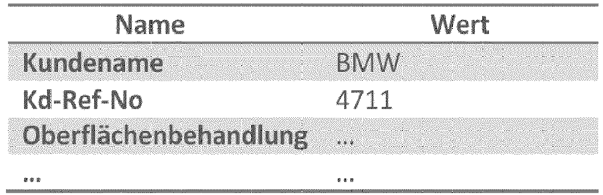
- Revisions-/Versionsliste
   Liste der Vorgängerrevisionen/-versionen eines Objekts. Wird unter anderem benötigt, um noch nicht synchronisierte Vorgängerversionen bei Bedarf im Zielsystem reservieren zu können. Die Tabelle zeigt eine Liste von Vorgängerversionen mit deren eindeutiger ID, ihrer entsprechenden Revision und deren Position in der Revisionsreihenfolge. 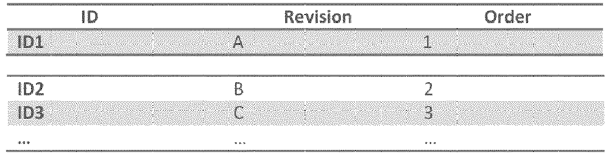
- Relationsliste
   Die Relationsliste beschreibt die Beziehungen des Objekts zu anderen Objekten im System (Strukturen, Beziehungen, ... ). Die Relationsliste teilt sich in zwei Unterlisten, die jeweils die Beziehungen ausgehend vom Objekt (Fromrelationship) und die Beziehungen endend beim Objekt (Torelationship) beschreibt. Jede der From- bzw. To-Beziehungen hat folgenden Aufbau. Jede Beziehung besitzt eine eindeutige ID, ein Typ, eine Attributliste und Informationen über das verbundene Objekt. Die Attributliste enthält Attribute der Verbindung (z. B. Transformationsmatrix einer 3D-Stückliste). Das über die Relation verbundene Objekt enthält seine Objekt ID aus dem Quellsystem, den Objekttyp und eine Liste von Attributen. Zur Unterstützung von noch nicht synchronisierten Vorgängerversionen wird auch hier eine Revisionsliste mitgeführt.
   o Fromrelationship
      ■ ID
      ■ Type
      ■ Attributes
      ■ toobject
         - revision list
         - id
         - type
         - ProcessAttribute
   o Torelationship
      ■ ID
      ■ type
      ■ Attributes
      ■ fromobject
         - revision list
         - id
         - type
         - ProcessAttribute
- Dokumentliste
   Die Dokumentliste enthält Verweise, mit denen ein Zugriff auf Dokumente und Geometrieinformationen des Objektes möglich sind.

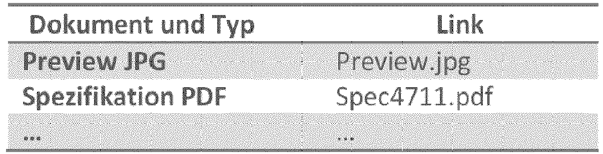

Optional: Als Abschluss des Anreicherungsprozesses kann der Auftragsdatensatz im Auftragsspeicher zwischengespeichert werden. Hier kann unter anderem Status und Statuskommentar zwischengespeichert werden. Somit ist ein Wiederanlaufen des Prozesses von diesem Speicherstand möglich.

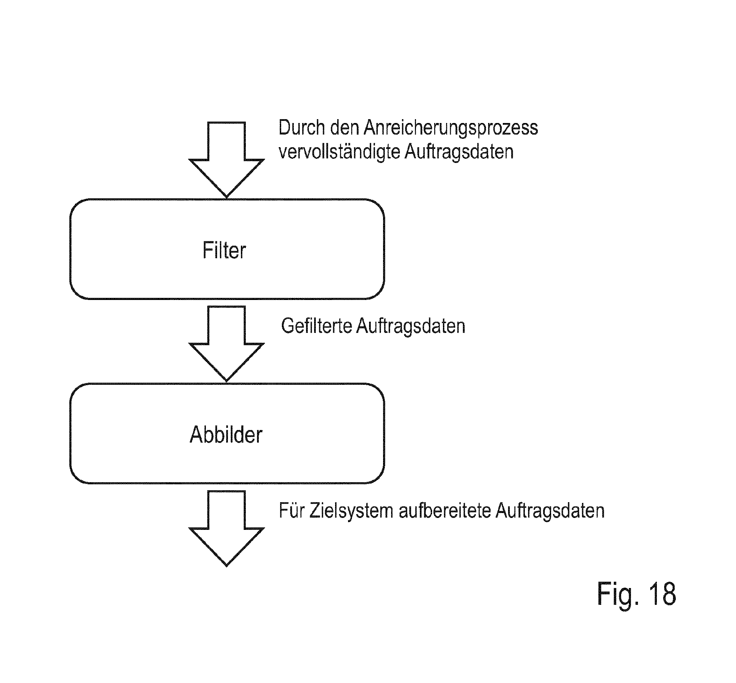

Im Prozessabschnitt des Abbildungsprozesses kann aufgrund der vollständig gelesenen Daten nun noch einmal überprüft werden, ob für bestimmte Aufträge eine Weiterbearbeitung notwendig ist oder ob diese zur weiteren Performancesteigerung abgebrochen werden können. Hierzu ist in der Fig. 18 ein Beispiel für eine Filterung und Abbildung der Auftragsdaten dargestellt.

Der Filter arbeitet mit einer Konfigurationsregel, die unter anderem folgende Möglichkeiten bereitstellt:
■ Lesezugriff auf Steuerdaten, Objektdaten und Prozessdaten und Strukturdaten des Auftrags (insbesondere Auftragstyp, Status, Sequenz und Daten des Anreicherungsprozesses)
■ Konstanten (Zeichenketten, Nummern, ... )
■ Vergleiche zwischen diesen gelesenen Daten und/oder Konstanten (gleich, größer, kleiner)
■ Einfache Mathematische Operationen zwischen den gelesenen Daten (addieren, subtrahieren, multiplizieren, dividieren, ... )
■ Zeichenoperationen (Ersetzung, Substring, toUpper, toLower, ... )

Die Konfigurationsregel wird ausgewertet und liefert ein boolsches Ergebnis. Anhand dieses Ergebnisses wird entschieden, ob eine weitere Bearbeitung notwendig ist oder abgebrochen werden kann. Abgebrochene Aufträge werden aus dem Auftragsspeicher entfernt oder in diesem entsprechend markiert (obsolet).

Für Aufträge, die ans Zielsystem übergeben werden sollen, erfolgt nun die Abbildung in die Struktur des Zielsystems (d. h. die Attribute und deren Werte werden fürs Zielsystem berechnet).

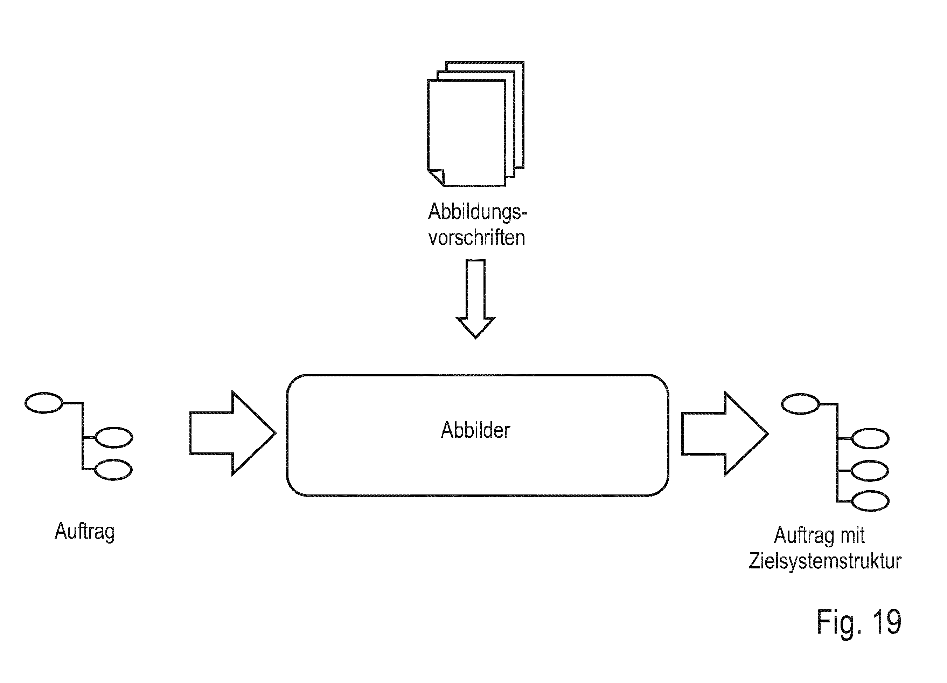

Dabei werden die im Auftrag gespeicherten Objektinformationen (Metadaten, Strukturdaten und Prozessdaten) mittels der Abbildungsvorschriften aus der Abbildungskonfiguration auf die Metadaten und Strukturen im Zielsystem abgebildet. Die Abbildungsvorschriften selbst sind hier vom Datenmodell des Kunden im Zielsystem und dessen PLM-Prozessen beeinflusst und müssen an sich ändernde Kundenbedingungen anpassbar sein. Ein Beispiel zur Erzeugung einer derartigen Zielstruktur ist in der Fig. 19 dargestellt.

Das Regelwerk der Abbildungsvorschriften umfasst dabei folgende Funktionen:
■ Bedingungen
   o Wenn ... dann ... sonst ...
   o Auswahl
• Vergleiche
   o Größer
   o Kleiner
   o Gleich
   o ungleich
• Stringoperationen
   o Ersetzung
   o Substring
   o Toupper
   o Tolower
• Erzeugen, Duplizieren, Löschen und Umbenennen von Elementen
• Konstanten
• Umwandeln von numerischen Texten in Zahlen
• Umwandeln von Zahlen in Zeichenketten
• Rechenoperationen
   o Aufrunden, Abrunden
   o Addieren
   o Subtrahieren
   o Multiplizieren
   o Dividieren
• Formatieren
   o Ersetzen von Tausender- und Dezimaltrennzeichen
   o Anwenden eines Ausgabemusters
   o Formatieren der ZahlendarsteIlungen (z.B. wissenschaftliche Darstellung)

Folgendes Beispiel zeigt, wie ein Gewicht aus dem Quellsystem für das Zielsystem aufbereitet werden kann. Im Beispiel wurde davon ausgegangen, dass das Quellsystem das Gewicht in Gramm liefert, das Zielsystem benötigt den Wert in Kilogramm. Das Zahlenformat im Ausgangssystem ist amerikanisch, im Zielsystem deutsch. Als Sonderwunsch des Kundens werden "0g" als "-kg" übertragen.

**Regel: WENN** (INDATA.ATTRIBUTELIST.WEIGHT == 0) **DANN** OUTDATA. ATTRIBUTELIST.GEWICHT = "- kg" **SONST** OUTDATA. ATTRIBUTELIST.GEWIGHT = **FORMAT**(INDATA.ATTRIBUTELIST.WEIGHT /1000, ,,#.###,####") +" kg"
■ 0 g → - kg
■ 1100 g → 1,1 kg
■ 1.1 g → 0,0011 kg

Bei der Abbildung wird der Auftrag um eine Zieldatenstruktur erweitert.

Als Abschluss des Abbildungsprozesses kann der Auftragsdatensatz im Auftragsspeicher zwischengespeichert werden. Hier kann unter anderem Status und Statuskommentar zwischengespeichert werden. Somit ist ein Wiederanlaufen des Prozesses von diesem Speicherstand möglich.

Nach der erfolgreichen Aufbereitung des Auftrags ist dieser nun bereit für die Übertragung an das Zielsystem.

Bei Verwendung nur eines zentralen Auftragsspeichers greifen Lese- und Schreibkomponente auf den gleichen Auftragsspeicher zu. Dadurch reduziert sich die Übertragung auf eine logische Zuordnung der Aufträge zur Komponente. Diese kann dann auf gleiche Weise wie die Lesekomponente Aufträge im Speicher entgegennehmen (Polling). Alternativ kann die Lesekomponente die Auftragsdaten auch direkt an die Schreibkomponente übergeben (Pushen).

Wie im Auftragsmanagement bereits erörtert, bietet es sich aus Stabilitätsgründen an, den Auftragsspeicher beim Quellsystem zu positionieren. Dies führt nun aber dazu, dass bei Nichterreichbarkeit der Quellkomponenten auch die weitere Abarbeitung von bereits erteilten Aufträgen gestört ist. Die zum Zielsystem gehörigen Prozessschritte können den Auftragsspeicher nicht mehr aktualisieren.

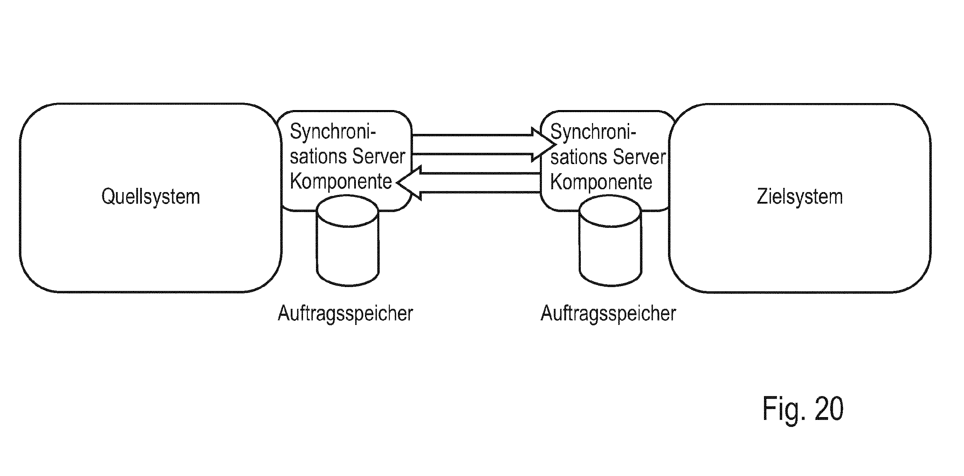

Abhilfe hierzu schafft die Entkopplung der Lese- und Schreibkomponente über einen teilweise "gespiegelten" Auftragsspeicher (gespiegelt werden nur die bereits für die Schreibkomponente aufbereiteten Aufträge). Hierdurch wird der Schritt der Übertragung komplexer. Ein Mechanismus muss nun die Aufträge zwischen den Auftragsspeichern synchronisieren. Eine Übertragung in den Auftragsspeicher der Synchronisierungskomponente des Zielsystems ist in der Fig. 20 dargestellt.

Mechanismen zur Synchronisation der Auftragsspeicher:
1. Das Zielsystem holt sich die Aufträge und sichert diese für die weitere Bearbeitung in einem eigenen Auftragsspeicher. Dazu liest es über die Synchronisationskomponente des Quellsystems die für das Zielsystem relevanten Aufträge. Dies kann man am Auftragstyp und Status erkennen. Die so gelesenen Aufträge schreibt es in seinen eigenen Auftragsspeicher.
2. Der Synchronisationsserver erzeugt die Aufträge im Auftragsspeicher des Zielsystems. Bei dieser Übertragungsart werden neue Aufträge für das Zielsystem von der Synchronisationskomponente des Quellsystems direkt in den Auftragsspeicher des Zielsystems geschrieben. Es werden also die für das Zielsystem relevanten Aufträge (Typ, Status) gelesen und mit einer Schreibfunktion der Synchronisationskomponente des Zielsystems in den Auftragsspeicher geschrieben.
3. Die Übertragung von Aufträgen vom einen ins andere System erfolgt über einen speziellen Prozess. Hier werden die Daten nicht von einer der Synchronisationskomponenten übertragen, sondern von einem Prozess, der die Aufträge mittels der einen Synchronisationskomponente liest und mittels der anderen Synchronisationskomponente schreibt.

Auch die Schreibkomponente führt verschiedene Varianten des Ablaufs bedingt durch die Auftragsdaten aus. Es muss also eine Auswahl des weiteren Bearbeitungsprozesses analog der bereits beschriebenen Auswahl für die weitere Bearbeitung erfolgen.

Der Auftragsdatensatz beinhaltet nun alle aus dem Quellsystem benötigten Daten in der Struktur des Zielsystems. Sollen nun aber Felder im Zielsystem aus Informationen des Quellsystems und Informationen, die im Zielsystem erfasst wurden, gefüllt werden, bedingt dies das Auslesen der benötigten Zielsystemfelder. Es muss also eine Anreicherung des Auftrags mit Zielsystemdaten analog zur bereits oben beschriebenen Anreicherung der Daten erfolgen.

Anhand der nun vollständig angereicherten Auftragsdaten kann über eine Filterdefinition der Auftrag aus der Bearbeitung entfernt werden.

Um das beschriebene Ziel zu erreichen, müssen nun die neuen Felder aus den Anreicherungsdaten des Quellsystems und den Anreicherungsdaten des Zielsystems gebildet werden. Dies erfolgt analog der oben beschriebenen Abbildungsdefinition in einem Abbildungsprozess.

Die Daten liegen nun komplett angereichert durch Quell- und Zielsystemdaten und abgebildet vor.

Über eine Auswahl für die weitere Bearbeitung wurde bereits die für diesen Auftrag notwendige Methode zur Erzeugung bzw. Aktualisierung der auftragsbezogenen Objekte des Zielsystems ausgewählt. Dies erfolgt ähnlich des Leseprozesses bei der Anreicherung der Daten.

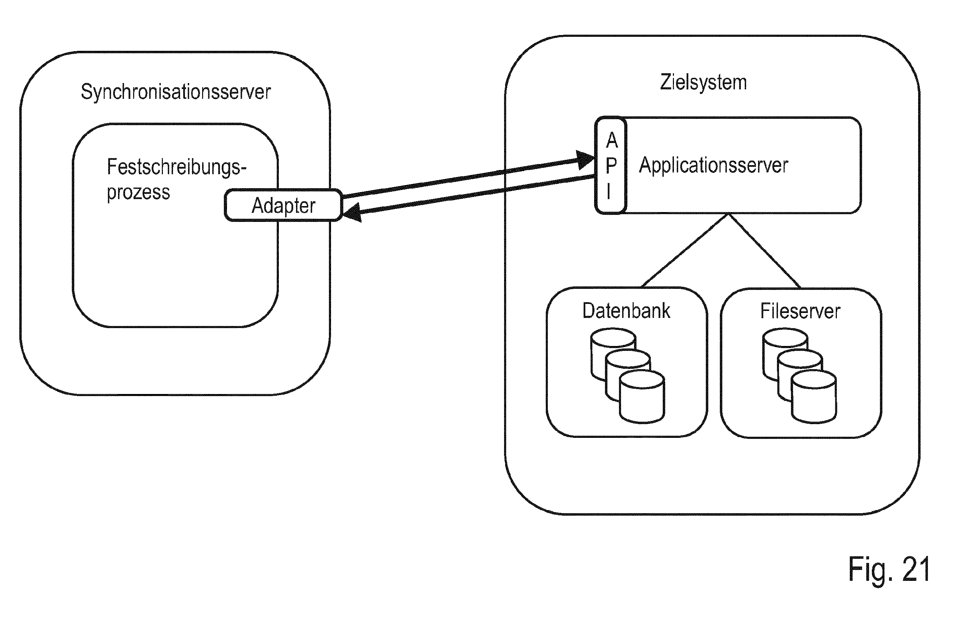

Zum Festschreiben der Daten in das Zielsystem übergibt der Festschreibungsprozess, wie er in der Fig. 21 abgebildet ist, die im Auftrag enthaltenen Daten an einen zielsystemspezifischen Adapter. Dieser Adapter bestimmt aus seiner Konfiguration und ausgewählten Feldern des Auftrags (Auftragstyp, Object-Id, Status, Objektdaten) die benötigten Einfüge- und Aktualisierungsoperationen und benutzt die Schnittstelle des Zielsystems um diese Operationen durchzuführen. Je nach System wird hierzu eine einfache Abfragesprache (SQL oder Derivate), eine Fourth-Generation-Language (ABAP, ... ) oder eine einfache API (C, Java, Web Services) verwendet. Intern greift das Zielsystem hierzu auf seine Datenbank(en) und Fileablagen (Fileserver) zu. Dadurch werden die Metadaten in der Datenbank aktualisiert und Dokumente in der zum Zielsystem gehörigen Fileablage abgelegt und verwiesen. Das Zielsystem enthält nun Spiegelobjekte mit den für den Arbeitsprozess im Zielsystem notwendigen Metadaten und Dokumenten.

Der bisher beschriebene Funktionsumfang des Systems reicht zur vollständigen Abbildung des Problems aus. So können Metadaten, Originaldateien und daraus generierte Neutralformate von der Lösung synchronisiert werden. Dabei können die Dokumente, wie bei der Anreicherung der Daten, bereitgestellt und konvertiert werden. Dieser Prozess der Bereitstellung und Konvertierung kann systemabhängig und abhängig von der Art der Konvertierung zeitaufwendig sein, sodass die Daten im Zielsystem erst mit einer Verzögerung bereitgestellt werden können. Um diese Verzögerung zu vermeiden, unterstützt das System die Möglichkeit, die Bereitstellung der Originaldaten und Konvertierung aufwandsabhängig teilweise zu einem späteren Zeitpunkt, in einem sogenannten Postprocessing, zu bewerkstelligen.

Da die TDM-/PLM-/ERP-Systeme in ihrem Dokumentenmanagementsystem Möglichkeiten zur Verfügung stellen, um eine Konvertierung von Dokumenten anzustoßen, kann diese Funktionalität vom Synchronisations-Server genutzt werden.

Systemabhängig stehen hierzu die in den folgenden Absätzen beschriebenen Anbindungsmöglichkeiten zur Verfügung.

Ein Auslösen einer Konvertierung beispielsweise durch den Synchronisations-Server oder durch das Zielsystem erfolgt.

Werden weitere Dokumente oder Neutralformate benötigt, plant der Synchronisations-Server in seiner Festschreibungskomponente durch Benutzung der Schnittstelle des Konverters eine neue Konvertierung ein. Der Konverter erzeugt bzw. besorgt dann die benötigten Dokumente und ordnet diese dem Zielsystemobjekt zu.

Durch das Anlegen/Ändern der Objekte bzw. das Ablegen von Dokumenten löst der Konverter, der auf diese Ereignisse im Zielsystem konfiguriert ist, eine Konvertierung aus und erzeugt Neutralformate bzw. kopiert Dokumente aus dem Quellsystem ins Zielsystem.

Der ablaufende Prozess bei der Synchronisation kann mehrere Systemkomponenten überwachen und Berichte oder Benachrichtigungen erzeugen.

Sind in einer Umgebung mehrere Synchronisations-Server installiert, können deren Überwachungskomponenten sich gegenseitig, mittels einer sogenannten Selbstüberwachung, überwachen. Hierzu werden die Überwachungskomponente eines Synchronisations-Servers zum "Master" und die anderen Synchronisations-Server zum "Slave" ernannt. Der "Master" überwacht die Überwachungskomponenten auf den anderen Servern und meldet den Ausfall eines "Slaves" über das Benachrichtigungssystem. Die "Slaves" prüfen den Master. Fällt der "Master" aus, wird anhand einer in der Konfiguration festgelegten Reihenfolge ein neuer Master ernannt. Dieser meldet den Ausfall des Masters an den Administrator und ersetzt diesen.

Die Überwachungskomponente des "Masters" prüft in konfigurierbarem Abstand die Funktionstüchtigkeit der in der Umgebung definierten Synchronisations-Server. Hierzu verfügen die Synchronisations-Server über eine Status- und Diagnosefunktion, die vom "Master" aufgerufen wird.

Insbesondere liefert diese Funktion Informationen bezüglich:
- Systemauslastung
- Konfigurationsinformationen
- Performance
- ...

Diese Informationen werden zur Benachrichtigung verwendet.

Eine weitere Möglichkeit der Überwachung von Systemkomponenten betrifft den Auftragsspeicher.

Hierzu prüft die Prozessüberwachung zeitgesteuert die vorhandenen Auftragsspeicher:
■ Sind die einzelnen Auftragsspeicher verfügbar?
   Sind Auftragsspeicher nicht mehr verfügbar, beispielsweise durch ein Netzwerkproblem, wird eine Benachrichtigung an den zuständigen Administrator ausgelöst. Hierzu verbindet sich der Überwachungsprozess in konfigurierbaren Abständen zum Speicher und führt Evaluierungslese und -schreibzugriffe aus.
■ Verfügen die Auftragsspeicher noch über genügend Restspeicher?
   Unterschreitet der freie Auftragsspeicher einen Schwellwert, wird eine Benachrichtigung an den zuständigen Administrator ausgelöst. Hierzu verfügen die verwendeten Speicheradapter über eine Statusabfrage, die wichtige Zustandsinformationen ausliest.
■ Ist noch genügend Speicher zum Schreiben der Logdateien vorhanden (insbesondere für die Logdatei zum Sichern der Auftragsdaten, wenn alle Auftragsspeicher ausgefallen sind)? Hierzu wird der verfügbare Speicher in den entsprechenden Verzeichnissen geprüft und beim Unterschreiten eines Schwellwerts eine Benachrichtigung ausgelöst.
■ Ist noch genügend Speicher in temporären Arbeitsverzeichnissen vorhanden?
   Hierzu wird der verfügbare Speicher in den entsprechenden Verzeichnissen geprüft und beim Unterschreiten eines Schwellwerts eine Benachrichtigung ausgelöst.
■ Werden neu eingeplante Aufträge in einer vorgegebenen Zeit in Bearbeitung genommen?
■ Bleiben Aufträge über den zulässigen Wert in bestimmten Bearbeitungszuständen hängen?
■ ....

Eine Überwachung des Reservierungsspeichers ist ebenfalls vorgesehen.

Zur Vermeidung, dass Objekte durch eine nicht mehr freigegebene Reservierung für immer gesperrt, und damit auch von jeglicher weiterer Synchronisation ausgeschlossen werden, wird der Reservierungsspeicher durch den Überwachungsprozess überwacht. Gibt es Reservierungen, die über einen definierten Zeitraum hinaus nicht mehr freigegeben werden, gibt der Überwachungsprozess diese frei und protokolliert dies.

Als weiterer Zusatz zur Überwachung erstellt die Prozessüberwachung auf Wunsch Berichte über die in einem Zeitraum bearbeiteten Aufträge und Systemzustände.
• Performance Bericht
   o Anzahl der Jobs
   o Anzahl der notwendigen Wiederholungen (behebbare Fehler)
      ■ Fehlerdetails und Übersicht der Fehler pro Fehlerkategorie
   o Anzahl der nicht behebbaren Fehler
      ■ Fehlerdetails und Übersicht der Fehler pro Fehlerkategorie
   o Durchschnittliche Bearbeitungszeiten für verschiedene Schritte der Bearbeitung
   o Einordnung der Systemperformance im Vergleich zu festgelegten Durchschnittswerten
   o Reaktionszeiten der beteiligten Systeme
   o Performance Beurteilung von zeitkritischen Funktionen anhand von festgelegten Durchschnittswerten

Die Erzeugung einer Benachrichtigung erfolgt über den Aufruf eines oder mehrerer der folgend aufgezählten Benachrichtigungsmöglichkeiten:
- Textnachricht (Email, SMS, ... )
- Verwenden des Benachrichtigungssystems eines Mobile Devices (iOS PushMesssages, ... )
- Windows Benachrichtigungsbereich der Startleiste
- Akustische Benachrichtigung/Warnung (Anruf mit Bandansage oder Warnton/Warnton oder)
- Visuelle Benachrichtigung (Kontrolllampe, Bildschirmmeldung, .. )

Neben der Benachrichtigung bietet die Überwachung auch eine übersichtliche Statusoberfläche, über die der Administrator den aktuellen Systemzustand anzeigen und Berichte und Fehler anzeigen lassen kann.

Nachfolgend wird die Erfindung an einem zweiten Beispiel, welches einen speziellen Synchronisationsablauf zwischen einem ersten und einem zweiten System mit einem zwischen den Systemen angeordneten Synchronisationsserver abbildet, beschrieben.

### Eventerfassung:

o Anwender speichert ein neues Teil mit der *Teilenummer=4711,* der *Version= 1* und der *Benennung=ABC* aus der *Organisationseinheit= Produktion* im System **A**.
o Durch die Speicherung von 4711, Version 1 wird im System **A** ein Event ausgelöst.

### Eventfilter:

o Anhand der direkt durch das Event gelieferten Daten wird nun entschieden, ob eine weitere Bearbeitung notwendig ist. In unserem Beispiel ist für das Event "Teile Neuanlage" und die mit dem Event gelieferten Metadaten kein Filter definiert. Das Event wir im Auftragsspeicher abgelegt.

### Ablage im Auftragspeicher:

o Die Ablage im Auftragsspeicher ist erfolgreich, deshalb ist keine Speicherung des Events in einem Alternativspeicher notwendig.

### Auftragsbearbeitung:

Auslesen und Optimieren der Aufträge aus dem Auftragsspeicher:
   o Das Event wird nun vom Auftragsprozessor ausgelesen und optimiert. Da im Beispiel nur ein Event im Auftragsspeicher vorhanden ist, ist durch den Optimierer keine Serialisierung und Vereinfachung der Events notwendig, das Event wird also an die Datenanreicherung übergeben.

### Datenanreicherung mit Daten aus System A:

o Die Datenanreicherung beschafft weitere Daten zum Objekt *4711* Version *1*, wie *Benennung= ABC* und *Organisationseinheit=Produktion*
o Dokumentdaten sollen in diesem Beispiel nicht an das Zielsystem übertragen werden, weshalb diese in unserem Beispiel von der Datenanreicherung keine Dokumente bereitgestellt werden und auch nicht übertragen werden.

### Datenfilter:

o Der Übertragungsauftrag ist jetzt komplett, es wird nun überprüft, ob ein evtl. vorhandenes Filter die Datensynchronisation verhindern soll. Im Beispiel sollen nur Daten aus der Organisationseinheit=Produktion übertragen werden. Dies trifft hier zu, der Datensatz wird nicht ausgefiltert, sondern zur Synchronisation freigegeben.

### Datenmapping:

o Es soll die *Benennung* aus System **A** an eine *Description* im Empfangssystem **B** übergeben werden, die *Teilenummer* aus System **A** soll im System **B** an *Teilenummer-Fremdsystem* übergeben werden. Im System B wird die Versionierung in der Reihenfolge A,B,C... vorgenommen.

### Übertragung:

o Das Event wird nun von der Lesekomponente für System A and die Schreibkomponente für System B übertragen.

### Datenanreicherung mit Daten aus System B:

o Im Beispiel soll keine weiteren Daten aus System B verwendet werden.

### Datenmapping:

o Auch ein weiteres Datenmapping ist nicht konfiguriert.

### Anlageprozess im System B:

o Im System B wird jetzt ein Teil mit der Teilenummer 4712 angelegt. Alle weiteren Daten wurden im Mappingregelwerk festgelegt. Die Anlage im System B löst nun ein Event aus, wodurch Daten aus dem System B an System A zurückübertragen werden. Im Beispiel ist kein Konvertierung/Postprocessing von Daten mittels eines externen Konvertierungssystems konfiguriert, weshalb kein Konverter angesteuert wird.

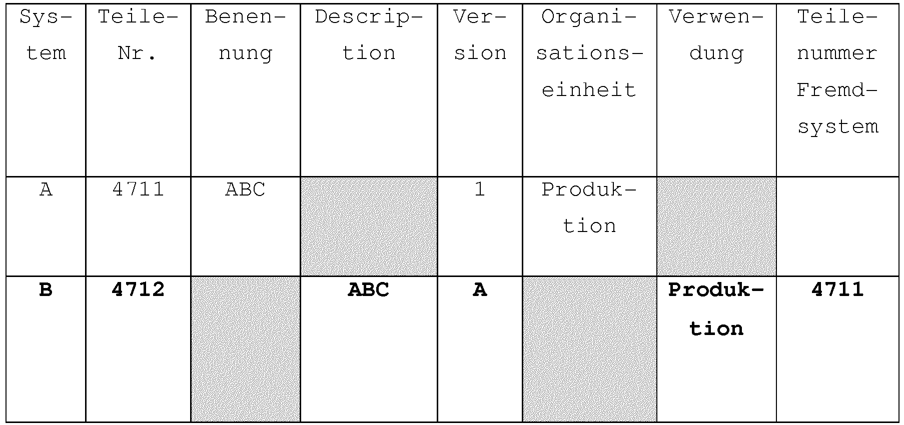

### Datenmapping, Rücksynchronisation nach System A:

o Im Beispiel soll die Teilenummer aus System **B** an ein Feld im System **A** mit der Bezeichnung *Teilenummer-Fremdsystem* zurück übergeben werden. Ein Filter für die Rückübertragung wurde nicht eingerichtet.

### Änderungsprozess im System A

o Im System A wird jetzt, dem Mapping Regelwerk entsprechen die Teilenummer-Fremdsystem mit 4712 geändert. 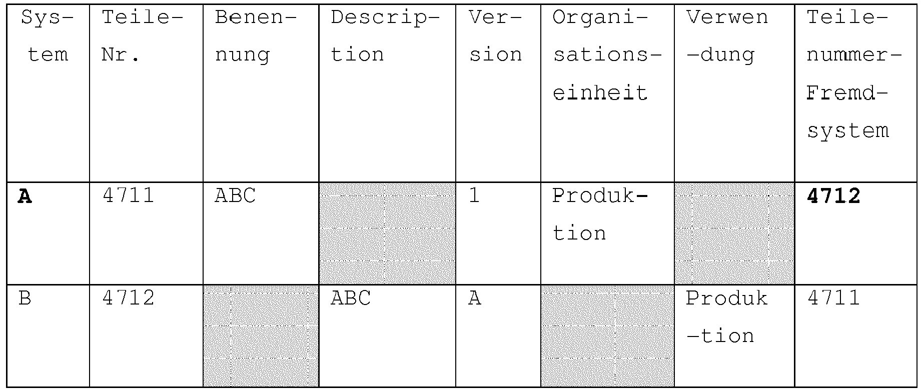
o Der Gesamtprozess wird mit allen Prozessschritten protokolliert und archiviert.

## Patentansprüche

1. Verfahren zur Synchronisation von Daten zwischen Entwicklungs- und/oder Produktionssteuerungssystemen, bei welchem Daten eines ersten Entwicklungs- und/oder Produktionssteuerungssystems an ein zweites Entwicklungs- und/oder Produktionssteuerungssystem oder umgekehrt übertragen werden, **dadurch gekennzeichnet, dass** eine vollautomatische Synchronisation der Daten des ersten und des zweiten Entwicklungs- und/oder Produktionssteuerungssystems gesteuert durch ein Auslöseereignis mittels eines zwischen den Entwicklungs- und/oder Produktionssteuerungssystemen bereitgestellten Synchronisationsservers erfolgt.

2. Verfahren nach Anspruch 1, **dadurch gekennzeichnet, dass** die Synchronisation zwischen zwei beliebigen Entwicklungs- und/oder Produktionssteuerungssystemen bidirektional erfolgt.

3. Verfahren nach Anspruch 1 oder 2, **dadurch gekennzeichnet, dass** die Synchronisation der Daten zwischen zwei beliebigen Entwicklungs- und/oder Produktionssteuerungssystemen asynchron und als ein Hintergrundprozess erfolgt.

4. Verfahren nach einem der Ansprüche 1 bis 3, **dadurch gekennzeichnet, dass** vor der Synchronisation eine Optimierung der zu übertragenden Daten durch ein Zusammenfassen mehrerer gleichartiger Synchronisationsaufgaben erfolgt.

5. Verfahren nach einem der Ansprüche 1 bis 4, **dadurch gekennzeichnet, dass** das Verfahren mit mehreren parallel arbeitenden Synchronisationsserver arbeitet.

6. Verfahren nach Anspruch 5, **dadurch gekennzeichnet, dass** einer der parallel arbeitenden Synchronisationsserver als zentrale Steuerinstanz die anderen Synchronisationsserver steuert.

7. Verfahren nach Anspruch 5, **dadurch gekennzeichnet, dass** alle parallel arbeitenden Synchronisationsserver gleichberechtigt ohne eine zentrale Steuerung arbeiten.

8. Verfahren nach einem der Ansprüche 5 bis 7, **dadurch gekennzeichnet, dass** nach einer Übergabe eines Synchronisationsauftrags an einen zugeordneten Synchronisationsserver, dieser sich nun in Verarbeitung befindliche Synchronisationsauftrag für alle anderen Server gesperrt wird.

9. Verfahren nach einem der Ansprüche 5 bis 7, **dadurch gekennzeichnet, dass** nach einer Übergabe eines Synchronisationsauftrags an einen zugeordneten Synchronisationsserver, dieser alle Synchronisationsaufträge, welche die gleichen Objekte bearbeiten, für alle anderen Synchronisationsserver sperrt.

10. Verfahren nach einem der Ansprüche 1 bis 9, **dadurch gekennzeichnet, dass** ein Auslöseereignis ein Ereignis, eine zeitgesteuerte periodische Abfrage oder eine manuelle Eingabe ist.

11. Verfahren nach einem der Ansprüche 1 bis 10, **dadurch gekennzeichnet, dass** das Verfahren insbesondere die Prozessschritte
- Eventerfassung,
- Datenanreicherung der Sendedaten,
- Datenfilterung der Sendedaten,
- Datenmapping,
- Synchronisationsbearbeitung mit Datenspeicherung im Empfangssystem,
- Datenmapping für die Rücksynchronisation ins Sendersystem,
- Datenfilterung für die Rücksynchronisation ins Sendersystem,
- Synchronisationsbearbeitung mit Datenspeicherung im Sendersystem und
- Komplette bidirektionale Prozessüberwachung des Gesamtprozesses
umfasst.

12. Verfahren nach einem der Ansprüche 1 bis 11, **dadurch gekennzeichnet, dass** neben der Synchronisation der Daten eine Diagnose und Statusüberwachung sowie eine automatisierte Fehlerkorrektur durchgeführt wird und dass das Verfahren Daten speichert, welche einen Wiederanlauf der Synchronisation nach einer Unterbrechung ermöglichen.
